# EUROPEAN PATENT SPECIFICATION

(11) **EP 2 109 287 B1**
(45) Date of publication and mention of the grant of the patent: **11.09.2013**
(21) Application number: 09157896.3
(22) Date of filing: 14.04.2009
(51) Int. Cl.: H04L 29/06, G06F 3/14, H04L 29/08

(54) **Multiple client control system**
System zur Steuerung mehrerer Clients
Système de contrôle de plusieurs clients

(30) Priority: 10.04.2008 US 44026 P; 09.04.2009 US 421586
(43) Date of publication of application: 14.10.2009
(73) Proprietor: Wyse Technology L.L.C., San Jose, CA 95134 (US)
(72) Inventor: Liang, Mike Chih-Kang, San Ramon, CA 94583 (US); Tang, Tom Yutian, Wang Jing Area Chao Yang District 100102 (CN)
(74) Representative: Müller-Boré & Partner Patentanwälte

(56) References cited:
- EP-A2- 1 538 524
- US-A1- 2007 079 252
- YUEDONG ZHANG ET AL: "Redar: A Remote Desktop Architecture for the Distributed Virtual Personal Computing" GRID AND COOPERATIVE COMPUTING, 2006. GCC 2006. FIFTH INTERNATIONAL CO NFERENCE, IEEE, PI, 1 October 2006 (2006-10-01), pages 1-8, XP031031008 ISBN: 978-0-7695-2694-2

## Description

### RELATED APPLICATION

The present application claims the benefit of priority under 35 U.S.C. §119 from U.S. Provisional Patent Application Serial No. 61/044,026, entitled "MULTIPLE THIN CLIENT CONTROL SYSTEM," filed on April 10, 2008, which is hereby incorporated by reference in its entirety for all purposes.

### FIELD

The subject technology generally relates to remote computing and, in particular, relates to controlling multiple clients.

### BACKGROUND

EP 1 538 524 A2 discloses a display system and methods for a large, high-resolution display that is scalable. The method includes steps of: Receiving video data over a network from a network computer, the video data formated for display on a large display, reformating the Video data on an intermediate computer for display on a number of small displays that make up a large display; and distributing reformated video data from the Intermediate computer to at least some of the small displays,

The article "Redar: A remote desktop architecture for the distributed virtual personal computing" of Yuedong Zahng et al, published in IEEE 2006 discloses a system to integrate various user interfaces from diverse service nodes into one virtual desktop, and to present the virtual desktop to an ultra-thin user client.

Most clients use a monitor for a graphics display to display a remote access session with a server. One approach for multiple module display arrangements is to use a Peripheral Component Interconnect (PCI) display card to extend one client to support four to six monitors to display a remote session with a server. In many cases, however, such an approach cannot support flexible layouts. For example, for a display card that supports four monitors, a client needs three PCI display cards to support a nine monitor layout, and in many cases may only do so by wasting computing resources and with significant investment. Furthermore, in such an approach, fault toleration is not good, such that if one display module of a PCI card is damaged, the PCI display card will become inoperable. Additionally, such an approach does not support large layouts as there are limitations on the number of displays a client can be extended by using the PCI display card.

### SUMMARY

In one aspect of the disclosure, a system of a master client is provided. The system comprises a remote access module configured to receive session data from a server via a remote access connection during a remote access session with the server and a multi-client control module configured to deliver all or a portion of the session data received from the server to one or more slave clients via one or more communication network connections.

In another aspect of the disclosure, a multiple client system is provided. The multiple client system comprises a master client and one or more slave clients. The master client comprises a remote access module configured to receive session data from a server via a remote access connection and a multi-client control module configured to deliver all or a portion of the session data received from the server to the one or more slave clients. Each of the one or more slave clients comprises a remote access module configured to connect to the master client via a communication network connection that is separate from the remote access connection between the master client and the server.

In yet another aspect of the disclosure, a method is provided. The method comprises receiving session data at a master client from a remote server via a remote access connection during a remote access session and delivering all or a portion of the session data received at the master client to one or more slave clients via one or more communication network connections.

In yet another aspect of the disclosure, a system is provided. The system comprises means for receiving session data at a master client from a remote server via a remote access connection during a remote access session and means for delivering all or a portion of the session data received at the master client to one or more slave clients via one or more communication network connections.

In yet another aspect of the disclosure, a machine-readable medium having instructions stored thereon is provided. The instructions are executable by one or more processors and comprise code for receiving session data at a master client from a remote server via a remote access connection during a remote access session and delivering all or a portion of the session data received at the master client to one or more slave clients via one or more communication network connections.

It is understood that other configurations of the subject technology will become readily apparent to those skilled in the art from the following detailed description, wherein various configurations of the subject technology are shown and described by way of illustration. As will be realized, the subject technology is capable of other and different configurations and its several details are capable of modification in various other respects, all without departing from the scope of the subject technology. Accordingly, the drawings and detailed description are to be regarded as illustrative in nature and not as restrictive.

### BRIEF DESCRIPTION OF THE DRAWING

Figure 1 is a block diagram representing a computer system in which aspects of the disclosure may be implemented.

Figure 2 is a schematic diagram of a system comprising a server and multiple clients according to an aspect of the disclosure.

Figure 3 is a block diagram of a system illustrating an example of multiple client control in which peripherals are shared between multiple clients according to an aspects of the disclosure.

Figure 4 shows an example of a a monitor layout according to an aspect of the disclosure.

Figure 5 is a flow diagram illustrating an exemplary process for distributing session data to multiple clients according to an aspect of the disclosure.

Figure 6 is a flow diagram illustrating an exemplary process performed by a master client according to an aspect of the disclosure.

Figure 7 is a flow diagram illustrating an exemplary process performed by a master client according to another aspect of the disclosure.

Figure 8 is a flow diagram illustrating an exemplary process performed by a slave client according to an aspect of the disclosure.

Figure 9 is a block diagram of a system illustrating an example of multiple client control according to another aspect of the disclosure.

Figure 10 is a flow diagram illustrating a process for distributing session data to multiple clients according to another aspect of the disclosure.

### DETAILED DESCRIPTION

The detailed description set forth below is intended as a description of various configurations of the subject technology and is not intended to represent the only configurations in which the subject technology may be practiced. The appended drawings are incorporated herein and constitute a part of the detailed description. The detailed description includes specific details for the purpose of providing a thorough understanding of the subject technology. However, it will be apparent to those skilled in the art that the subject technology may be practiced without these specific details. In some instances, well-known structures and components are shown in block diagram form in order to avoid obscuring the concepts of the subject technology.

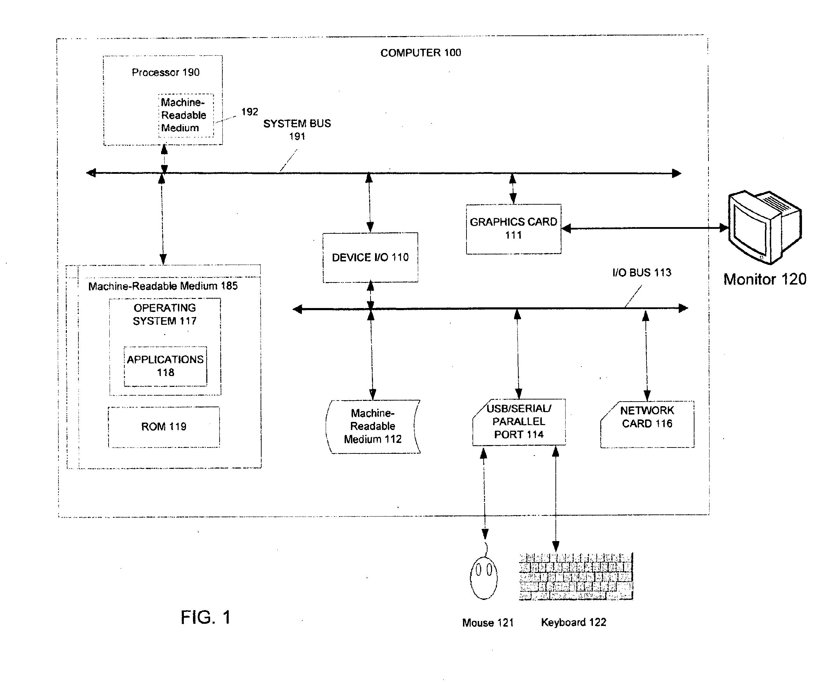

Figure 1 is a block diagram representing an exemplary computer system 100, in which aspects of the disclosure may be implemented. The computer system 100 includes a processor 190 and a system bus 191 for providing communication between the processor 190 and other devices in the computer system 100, examples of which are described below.

The processor 190 may include a general-purpose processor or a specific-purpose processor for executing instructions and may further include a machine-readable medium 192, such as a volatile or non-volatile memory, for storing data and/or instructions for software programs. The instructions, which may be stored in a machine-readable medium 192 and/or 185, may be executed by the processor 190 to control and manage access to the various networks, as well as provide other communication and processing functions. The instructions may also include instructions executed by the processor 190 for various user interface devices, such as a monitor 120 and a keyboard 122.

The processor 190 may be implemented using software, hardware, or a combination of both. By way of example, the processor 190 may be implemented with one or more processors. A processor may be a general-purpose microprocessor, a microcontroller, a Digital Signal Processor (DSP), an Application Specific Integrated Circuit (ASIC), a Field Programmable Gate Array (FPGA), a Programmable Logic Device (PLD), a controller, a state machine, gated logic, discrete hardware components, or any other suitable device that can perform calculations or other manipulations of information.

The computer system 100 includes a graphics card 111 for processing display data from the processor 190 or other device into a video format for display on a monitor 120. The video signal may be in any video format including Digital Visual Interface (DVI), Video Graphics Array (VGA), High-Definition Multimedia Interface (HDMI) or other suitable video format. The computer system 100 further includes an input/output bus 113 for providing communication between the processor 190 and input/output devices. Examples of input/output devices include machine-readable medium 112, peripheral ports 114, a network card 116 and/or other device. The input/output bus 113 is coupled to the system bus 191 through a device I/O 110. The peripheral ports 114 allow the computer system 100 to receive data from and/or send data to peripheral devices, which may include a mouse 121, a keyboard 122 and/or other devices. The network card 116 allows the computer system 100 to receive data from and send data to a remote computer over a communication network such as a Local Area Network (LAN), a Wide Area Network (WAN) and/or other network. The network card 116 may include a wireless LAN or WAN transceiver for enabling a wireless network connection. The machine-readable medium 112 may include a hard drive, CD-ROM, a removable disk or other suitable storage device.

The computer system 100 also includes the machine-readable medium 185, which may include Read Only Memory (ROM), Random Access Memory (RAM), flash memory and/or other types of memory. The machine-readable medium 185 stores an operating system 117 and one or more application 118, which are managed by the operating system 117 and executed by the processor 90.

A machine-readable medium can be one or more machine-readable media. Software shall be construed broadly to mean instructions, data, or any combination thereof, whether referred to as software, firmware, middleware, microcode, hardware description language, or otherwise. Instructions may include code (e.g., in source code format, binary code format, executable code format, or any other suitable format of code).

Machine-readable media (e.g., 192) may include storage integrated into a processor, such as might be the case with an ASIC. Machine-readable media (e.g., 185 and 112) may also include storage external to a processor, such as a Random Access Memory (RAM), a flash memory, a Read Only Memory (ROM), a Programmable Read-Only Memory (PROM), an Erasable PROM (EPROM), registers, a hard disk, a removable disk, a CD-ROM, a DVD, or any other suitable storage device. In addition, machine-readable media may include a transmission line or a carrier wave that encodes a data signal. Those skilled in the art will recognize how best to implement the described functionality for the processor. According to one aspect of the disclosure, a machine-readable medium is a computer-readable medium encoded or stored with instructions and is a computing element, which defines structural and functional interrelationships between the instructions and the rest of the system, which permit the instructions' functionality to be realized. Instructions may be executable, for example, by the processor 190 Instructions can be, for example, a computer program including code.

The computer system 100 illustrated in Figure 1 provides one example of a computer system that may be used to implement clients and servers according to aspects of the disclosure, which are described below. Clients and servers according to aspects of the disclosure are not limited to the computer system 100 illustrated in Figure 1.

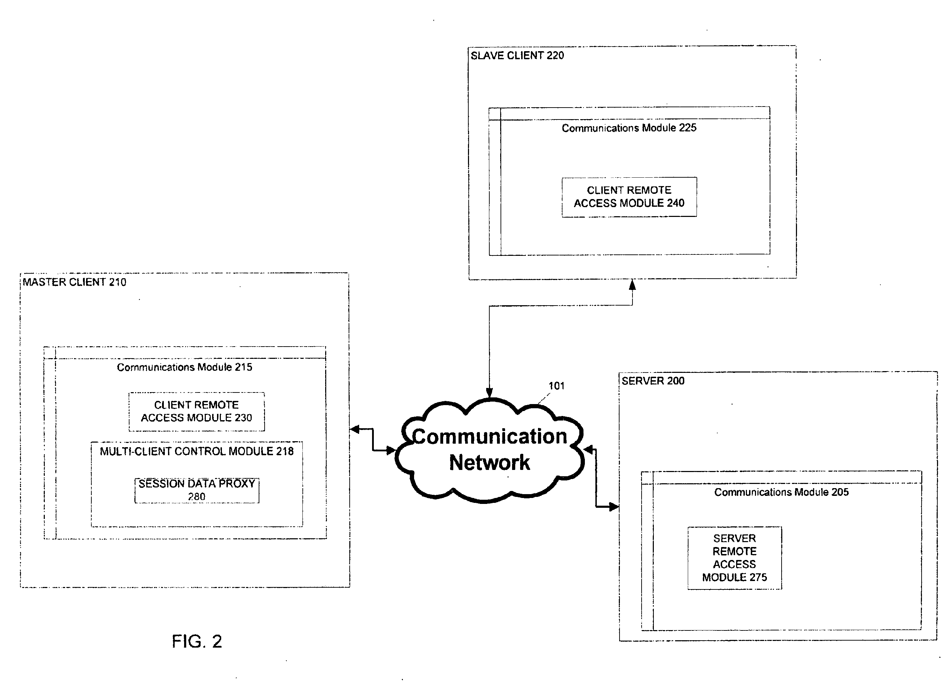

Figure 2 is a schematic diagram representing a system comprising multiple clients 210 and 220 and a server 200 according to an aspect of the disclosure. Two clients 210 and 220 are shown in the example in Figure 2, and the system can include any number of clients. The clients 210 and 220 may operate in a networked environment using logical connections to connect to the server 200 or one another. Each client 210 and 220 may use a network card 116 or other type of network interface to communicate with the server 200 or one another over a network 101. The network 101 can be a conventional network such as Ethernet, xDSL, Wireless, or other LAN or WAN network.

Each client 210 and 220 can represent a computer, a laptop computer, a thin client, a Personal Digital Assistant (PDA), a portable computing device, or other suitable device with a processor 190. According to one aspect of the disclosure, when a client is a thin client, it may be a device having at least a processor and memory, where the total amount of memory of the thin client is less than the total amount of memory in server 200. A thin client may not have a hard disk. In certain configurations, a client can represent a mobile telephone, an audio player, a game console, a camera, a camcorder, an audio device, a video device, a multimedia device, or a device capable of supporting a connection to remote server 200. A client can be stationary or mobile.

In one aspect, the clients 210 and 200 are divided into two roles: a master client and a slave client. In the example illustrated in Figure 2, the client 210 is a master client and the client 220 is a slave client. The master client 210 may also be referred to as a main client. In one aspect, the master client 210 initiates and manages a remote access connection to the server 200. During a remote session with the server 200, the master client 220 passes all or a portion of session data received from the server 200 to the slave client 220, as discussed further below.

In one aspect, the server 200, master client 210 and slave client 220 include communication modules 205, 215 and 225, respectively. The communications modules 205, 215 and 225 allow the server 200, master client 210 and slave client 220, respectively, to communicate with other clients or servers over a network. The communications module 205, 215 and 225 may be implemented using software, hardware, or a combination of both. By way of example, communications modules 215 and 225 may be implemented with one or more communications devices, such as, but not limited to, a modem, RS-232, Ethernet, Wi-Fi, IEEE 802.11x or other forms of communication interface. Modules of the communications modules 205, 215 and 225 described below may be implemented in software, hardware or a combination of both. For example, the modules may be implemented in software stored in the machine-readable medium 185 and executed by a processor 190.

The communications module 215 of the master client 210 includes a client remote access module 230 and the communications modules 205 of the server 200 includes a server remote access module 275. In one aspect, the client remote access module 230 is configured to initiate and maintain a remote access connection with the server remote access module 275. Together, the client remote access module 130 and the server remote access module 275 allow the master client 210 0 to remotely access the server 200 over the remote access connection.

In one aspect, the server remote access module 275 is configured to send session data (e.g., display data of an application running on the server 210) to the client remote access module 230 over the remote access connection. This allows the master client 215 to locally display an application that is running remotely on the server 200. In another aspect, the client remote access module 230 is configured to send session data (e.g., user commands inputted via a mouse .121 or keyboard 122 at the master client 210) to the server remote access module 275 over the remote access connection. This allows the server 200 to input the user commands received from the master client 210 0 to the application running on the server 200. Together, these aspects allow a user at the master client 210 to locally view and input commands to an application that is running remotely on the server 200.

Examples of remote access applications, which can include the client remote access module 230 and the server remote access module 275, include Microsoft® Remote Desktop Protocol (RDP) application and the Citrix® Independent Computing Architecture (ICA) application. The disclosure, however, is not limited to these exemplary remote access applications. The remote access application can come pre-installed with the respective operating systems operating on the client 210 and server 200 or added later.

The communications module 215 of the master client 210 also includes a multi-client control module 218. In one aspect, the multi-client control module 218 is configured to deliver all or a portion of session data received from the server 210 to one or more slave clients 220, as discussed further below. The multi-client control module 218 includes a session data proxy 280. In one aspect, the session data proxy 280 is configured to instruct one or more slave clients 220 to connect to the master client 210 and receive session data from the master client 210. The multi-client control module 218 may be executed as apart of the applications 118. The session data proxy 280 may do this by sending setting data to the slave clients through a File Transfer Protocol (FTP) server instructing the slave clients to setup connection to the master client 210 and receive session data from the master client 210, as discussed further below. For the connection between the master client 210 and the slave client 220, typically a slave client 220 may connect to the master client 210 using a network card 116 of the slave client 220 and the master client 210 may be connected to the slave client 220 using a network card 116 of the master client 210. Alternatively, the master client 210 may be configured to connect to the slave client 220 and the slave client 220 may be connected to the master client 210 to setup the connection.

The communications module 225 of the slave client 220 includes a client remote access module 240, which may be executed as a part of the applications 118. In one aspect, the client remote access module 240 is configured to connect to the master client 210 over a network and receive session data from the multi-client control module 218 of the master client 210. For example, the client remote access module 240 may connect to the master client 210 via a remote access connection using ICA/RDP protocols or other remote access protocols. In this example, the remote access connection between the master client 210 and the slave client 220 is different from the remote access connection between the server 200 and the master client 210. Also, in this example, the master client 210 can act as a server of the remote access connection to deliver session data to the slave client 220. The client remote access module 230 may also be configured to create a remote session with the server 200 over a remote access connection (e.g., when the slave client 220 is running in a standalone mode without the master client 210). The client remote access module 230 may be executed as a part of the applications 118.

The client remote access module 240 may connect to the master client 210 over a network, for example, via a modem connection, a LAN connection including the Ethernet or a broadband WAN connection including DSL, Cable, T1, T3, Fiber Optics, Wi-Fi or other network connection. The network can be a LAN network, a WAN network, the Internet, an intranet or other network. A network may include routers for routing data between clients and/or servers that are connected to each other over the network. Devices (e.g., server) on the network may be addressed by a corresponding network address, such as, but not limited to, an IP address, an Internet name. WINS name, Domain name or other system name.

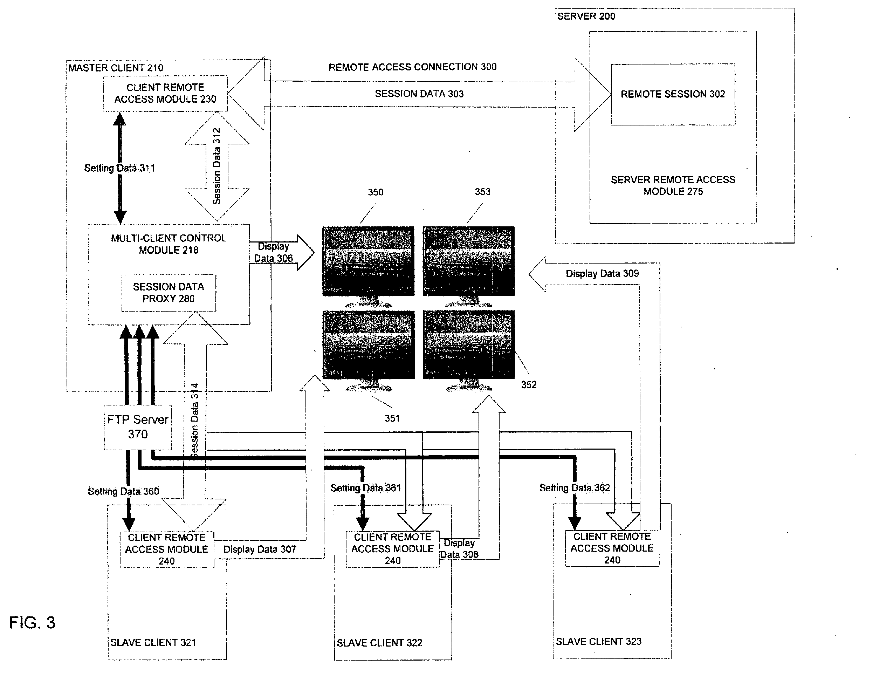

Figure 3 is a block diagram of a system illustrating multi-client control in which peripherals are shared between multiple clients according to an aspect of disclosure. In the example shown in Figure 3, the communication network 101 (refer to Figure 2) includes one master client 210 and three slave clients 321, 322 and 323. The communication network 101 in the system, however, may include any number of slave clients. In the example shown in Figure 3, the master client 210 is coupled to a monitor 350 and each slave client 321, 322 and 323 is coupled to a respective monitor 351, 352 and 353.

In one aspect, the master client 210 initiates a remote access session with the server 200. During the remote access session, the master client 210 receives session data 303 from the server 200 via a remote access connection 300 and delivers all or portions of the received session data 303 to the slave clients 321, 322 and 323.

In one aspect, the session data 303 includes display data of a desktop and/or one or more applications running on the server 200. In this aspect, the master client 210 receives the display data as part of the session data 303 via the remote access connection 300 and divides the display data into four display regions. The master client 210 displays one of the display regions locally on monitor 350. The master client 210 delivers each of the other three display regions to one of the slave clients 321, 322 and 323. Each slave client 321, 322 and 323 receives one of the display regions from the master client 210 and displays the received display region on the respective monitor 351, 352 and 353. Thus, in this example, the display data from the server 200 is divided into four display regions with each display region displayed on one of the four monitors 350, 351, 352 and 353. This arrangement allows the display data received by the master client 210 during a remote session with the server 200 to be displayed over a larger display area. For example, the monitors 350, 351, 352 and 353 may be used to form a large bulletin board in a public place for advertising purposes.

Operations of the master client 210, server 200 and slave clients 321, 322 and 323 for displaying display data of a remote session on multiple monitors 350, 351, 352 and 353 will now be discussed according to aspects of the disclosure.

Referring to Figure 3, the client remote access module 230 of the master client 210 initiates a remote access connection 300 with the server remote access module 275 of the server 200. To do this, the client remote access module 230 may send a request for remote access to the server remote access module 275 (e.g., over a TCP/IP network connection). The server remote access module 275 may respond by sending a request to the client remote access module 230 for user credentials. The client remote access module 230 sends the requested user credentials to the server remote access module 275. If the sever remote access module 275 accept the user credentials, then the server remote access module 200 establishes a remote session 302, which allows the master client 210 to remotely access the server 200 via a remote access connection 300. The remote session 302 provides a user at the master client with access to applications on the server 200.

During the remote session 302, the server remote access module 200 sends display data as part of the session data 303 to the client remote access module 230 via the remote access connection 300. The session data 303 may include display data of a desktop and/or one or more applications running on the server 200. The desktop may include, for example, icons of different applications that can be launched on the server 200. The display data sent from the server 200 to the master client 210 allows the master client 210 to locally display the desktop and/or one or more applications running on the server 200. The client remote access module 230 sends user commands (e.g., inputted via a mouse 121 or keyboard 122 at the master client 210) as part of the session data 303 to the server remote access module 200. The server 200 inputs the received user commands to the desktop and/or one or more application running on the server 200. For example, if the user commands include mouse movements, then the server 200 moves a pointer on the desktop running on the server 200 accordingly. The session data 303 may include other information, for example, the client peripherals mapping on the server200 (e.g., the mapping of printer or the mapping of device of Universal Serial Bus), depending on the remote access protocol being used (e.g., ICA or RDP).

In one aspect, the client remote access module 230 sends session data 312 to the multi-client control module 218. The session data 312 may be the original session data 303 received by the master client 210 or the session data after parsing by the client remote access module 230. The client remote access module 230 also sends setting data 311 to the multi-client control module 218 instructing the muiti-client control module 218 what actions are to be performed on the session data 312. For example, when the session data 312 includes display data, the setting data 311 may instruct the multi-client control module 218 to divide the display data into four display regions, display one of the display regions locally on monitor 350 and distribute the other display regions to slave clients 321, 322 and 323 for display on monitors 351, 352 and 353, respectively.

In one aspect, the setting data 31 for the multi-client control module 218 is stored in a file (e.g., an INI file) on a FTP server (not shown). The file with the setting data 311 may be stored on the FTP server by the client remote access module 230 or other module and read by the multi-client control module 218 from the FTP server. The setting data 311 is not limited to stored settings on a FTP server, and other mechanisms may also be used to configure and store the setting data 311.

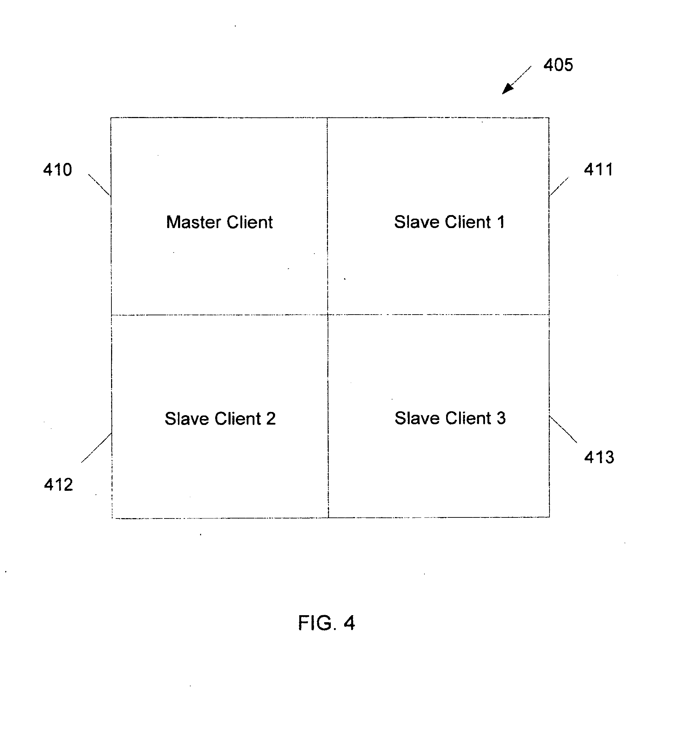

Figure 4 illustrates an example of a monitor layout that may be specified by the setting data 311. The display data 405 is divided into four display regions 410, 411, 412 and 413, in which display region 410 is assigned to the master client 210 and the other display regions 411, 412 and 413 are assigned to slave clients 1, 2 and 3, respectively. In this example, the multi-client control module 218 displays display region 410 locally on monitor 350 and distributes the other display regions 411, 412 and 413 to slave clients 1, 2 and 3, respectively. The setting data 311 may also include a Media Access Control (MAC) address for each of the slave clients 1, 2 and 3 identifying which slave client is to receive a particular display region. In this example, the slave clients 1, 2 and 3 may correspond to slave clients 323, 321 and 322 in Figure 3. Thus, in this example, the setting data 311 instructs the multi-client control module 218 how to divide the display data into display regions and distribute the display regions among the slave clients.

In one aspect, the session data proxy 280 reads the setting data 311 to determine which slave clients are to receive session data 314 (e.g., display data) from the multi-client control module 218. For example, the slave clients may be identified by corresponding MAC addresses. The session data proxy 280 then sends setting data 360, 361 and 362 to the slave clients 321, 322 and 323, respectively, instructing the slave clients to connect to the master client 210 to receive session data 314. The setting data 360, 361 and 362 may include a network address of the master client 210 for the slave clients 321, 322 and 323 to connect to the master client 210. In this aspect, the master client 210 may listen for connections from the slave clients 360, 361 and 362. Alternatively, the slaver clients 321, 322 and 323 may listen for a master client connection.

The setting data 360, 361 and 362 for each slave client 321, 322 and 323, respectively, may also include instructions specifying a display region to be displayed by the respective slave client 321, 322 and 323. The session data proxy 280 may send the setting data 360, 361 and 362 to INI files on a FTP server 370, which can be read by the slave clients 321, 322 and 323. The setting data 360,361,362 are not limited to stored settings on a FTP server, and other mechanisms may also be used to send the setting data 360, 361 and 362 to the slave clients 321, 322 and 323.

The client remote access modules 240 of the slave clients 321, 322 and 323 read the setting data 360, 361 and 362, respectively, and connect to the master client 210 (e.g., using an network address of the master client in the setting data 360, 361 and 362). After the slave clients 321, 322 and 323 are connected to the master client 210, the session data proxy 280 delivers the session data 314 to the client remote access modules 240 of the slave clients 321, 322 and 323. The session data 314 delivered to the slave clients 321, 322 and 323 may be the same. Alternatively, the session data 314 for each slave client 321, 322 and 323 may only include a portion of the session data 312 to be delivered to the particular slave client 321, 322 and 323. For the example where display data in the session data 312 is divided into display regions, the multi-client module 218 may send each slave client 321, 322 and 323 only the display region assigned to the slave client 321, 322 and 323. In this aspect, each slave client 321, 322 and 323 can directly display the display data it receives from the master client 210 and does not need to receive setting data 360, 361 and 363 with monitor layout information.

The client remote access module 240 of each slave client 321, 322 and 323 decodes and performs actions on a local resource using the received session data 314. For the example where the session data 314 includes display data divided into display regions, each slave client 321, 322 and 323 displays the corresponding display region of the display data on its local monitor 351, 352 and 353. In the example in Figure 1, slave client 321 sends display data 307 to monitor 351, slave client 322 sends display data 308 to monitor 352 and slave client 323 sends display data 309 to monitor 353. Each slave client 321, 322 and 323 may include a graphics card 111 for processing display data into a video format that can be read by the respective monitor 351, 352 and 353.

Thus, in the above example, the display data in the session data 303 originally received by the master client 210 is divided into four display regions, in which one display region is displayed by the master client 210 on monitor 350. The master client 210 distributes the other three display regions to the respective slave clients 321, 322 and 323. Each slave client 321, 322 and 323 display the received display region on its respective monitor 351, 352 and 353. Although the example in Figure 1 illustrates four monitors 350, 351, 352 and 353, the display data from the server 200 may be divided into any number of display regions for display on any number of monitors using any number of slave clients.

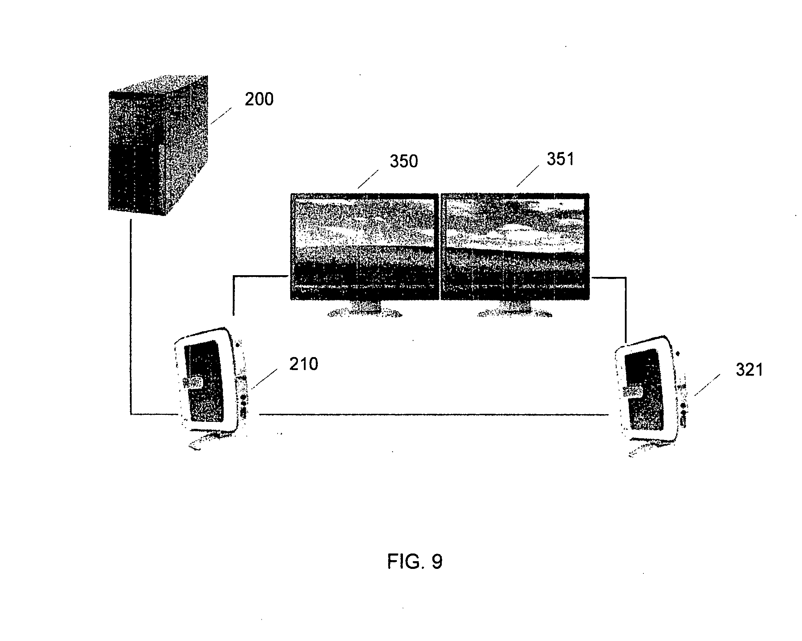

Figure 9 shows an example of a system comprising the master client 210 and one slave client 321 for displaying session data on two monitors 350 and 351. In this example, the master client 210 receives session data from the server 200 via a remote access connection, which can be based on RDP/ICA protocols or other remote access protocol. The slave client 321 is connected to the master client 210 via a network connection (e.g., LAN connection). During the remote session with the server, the master client 210 receives display data as part of the session data from the server 200. The display data may be of a desktop and/or one or more applications running on the server 200. The master client 210 divides the display data received from the server 200 into two display regions. The master client 210 displays one of the display regions locally on monitor 350, which may be connected to the master client 210 via a DVI, VGA, HDMI or other video connection. The multi-client control module 218 of the master client 210 sends the other display region of the display data to the slave client 321. The slave client 321 displays the other display region on its monitor 351, which may be connected to the slave client 321 via a DVI, VGA, HDMI or other video connection.

Thus, the master client 210 and slave clients 321, 322 and 323 according to aspects of the disclosure allow a remote session with the server 200 to be displayed on multiple monitors 350, 351, 352 and 353. The multiple display arrangement may be used to form a bulletin board or other large display. In this aspect, an application on the server 200 displaying, for example, advertisement, stock quotes, news, or other information, can be displayed on multiple monitors forming a bulletin board.

The master client 210 according to aspects of the disclosure can support flexible monitor layouts. For example, if a six monitor layout is desired, then the master client 210 in Figure 3 can divide the display data into six display regions instead of four, connect with five slave clients instead of three, display one of the display regions locally, and distribute each of the other five display regions to one of the five salve clients for display on the respective monitor. The desired monitor layout can be specified by the setting data 311 of the multi-client control module 218, which can instruct the multiple-client control module 218 how to divide the display data into display regions and to which slave clients to distribute the display regions. In one aspect, the master client 210 may store a plurality of setting data 311 in machine-readable medium 185, where each of the plurality of setting data 311 specifies a particular monitor layout. In this aspect, a user at the master client 210 can select a desired monitor layout and the client remote access module 230 send the corresponding setting data 311 to the multi-client control module 218.

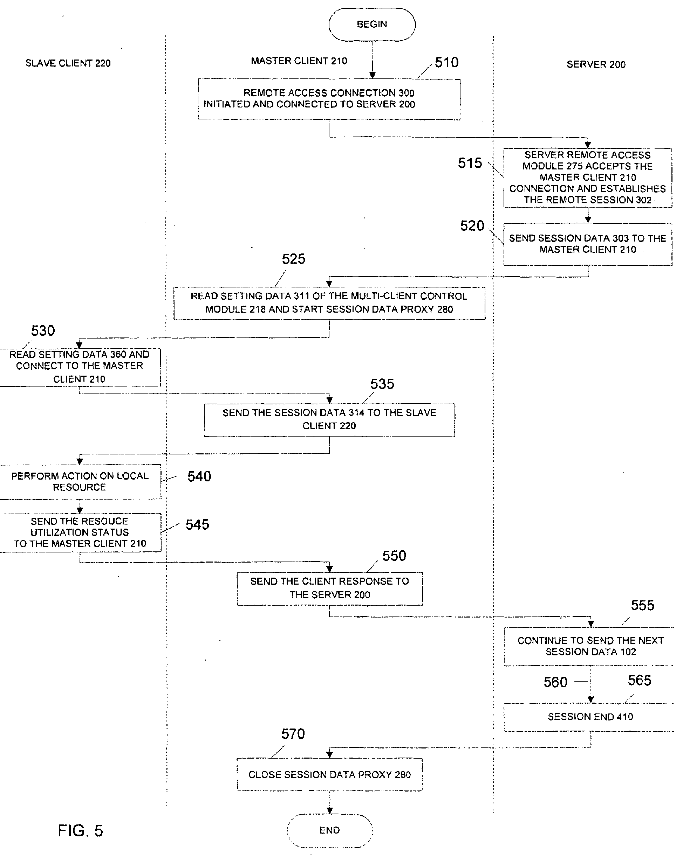

Figure 5 is a flow diagram illustrating a process for distributing session data to multiple clients according to an aspect of the disclosure.

The process starts on the master client 210 side. In step 510, the client remote access module 230 of the master client 210 initiates a remote access connection 300 to the server 200. For example, the client remote access module 230 may send a request for remote access to the server 200. On the server 200 side, in step 515, the server remote access module 275 accepts the remote access connection 300 (e.g., by accepting user credentials of the master client 210) and establishes a remote session 302 for the master client 210. In step 520, the server remote access module 275 sends session data 303 to the master client 210 via the remote access connection 300.

Moving back to the master client 210 side, in step 525, the multi-client control module 218 reads the setting data 311 and the session data proxy 280 starts. As discussed above, the setting data 311 may instruct the multi-client control module 218 how to divide the session data 312 among the slave clients and distribute the session data 314 among the slave clients. The session data proxy 280 sends setting data 360 to the slave clients instructing the slave clients to connect to the master client 210 to receive the session data 314. The session data proxy 280 may also distribute the session data 314 to the slave clients 220 based on the setting data 311 after the slave clients 220 are connected to the master client 210.

Moving to a slave client 220 side, in step 530, the client remote access module 240 of the slave client 220 reads the setting data 360 and connects to the master client 210 based on the setting data 360. For example, the setting data 360 may include the IP address of the master client for connecting to the master client 210. The slave client 220 may be any one of the slave clients 321, 322 and 323 in Figure 3.

Moving back to the master client 210 side, in step 535, the multi-client control module 218 sends the session data 314 to the slave client 220.

Moving back to the slave client 220 side, in step 540, the client remote access module 240 of the slave client 220 receives the session data 314 and performs actions on a local resource using the received session data 314. For example, local resources of the slave client 220 may include the processor 190, machine-readable medium 185 and/or graphics card 111 within the slave client 220. Local resources of the slave client 220 may also include one or more peripheral. devices connected to the slave client 220. Peripheral devices may include a monitor 351, a speaker, a printer or other peripheral device connected to the slave client 220. A peripheral device may be connected to the slave client 220 via a wired or wireless (e.g., Bluetooth or infrared) connection. For example, the local monitor 351 of the slave client 220 may be connected to the slave client 220 via a DVI, VGA, HDMI or other video connection. For the example where session data 314 includes display data, the slave client 220 may use the graphics card III and local monitor 351 to display the display data. In this example, the slave client 220 uses local resources to render the display data in visual form to a user or multiple user.

In step 545, the client remote access module 240 sends a resource utilization status to the master client 210. The resource utilization status may inform the master client 210 0 that the slave client 220 has finished performing an action on (e.g., displaying) a block of session data 314 and is ready to receive the next block. If more than one slave client is used, then steps 530 through 545 in Figure 5 may be performed for each slave client.

Moving back to the master client 210 side, in step 550, the client remote access module 230 of the master client 210 sends a client response to the server 200. The client response may include, for example, user commands inputted via a mouse 121, keyboard 122 or other input device at the master client 210. The client response may include other information, for example, depending on the remote access protocol (e.g., ICA or RDP) being used.

Moving back to the server 200 side, in step 555, the server 200 continues to send the next session data 303 to master client 210. For example, the next session data 303 may include display data that is updated based on the client response received from the master client 210. In step 560 a series of session data is exchanged between the server 200 and the master client 210. In step 565, the remote access session 302 ends (e.g., master client 210 logs out of remote session). On the master client 210 side, the session data proxy 280 is closed in step 570.

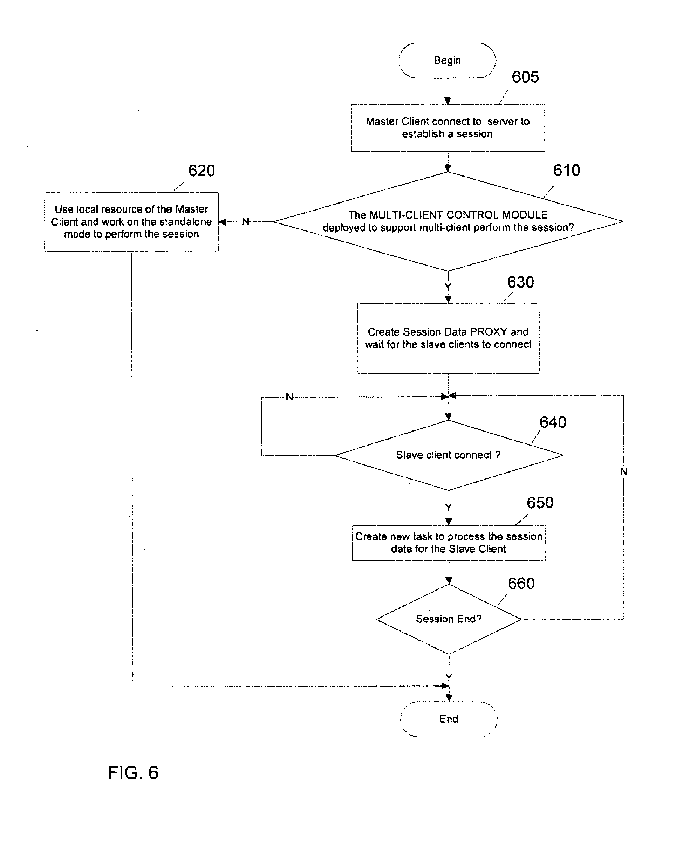

Figure 6 is a flow diagram illustrating a process performed by the master client 210 according to an aspect of the disclosure. In step 605, the client remote access module 230 connects to the server 200 to establish a remote access session with the server 200. In step 610, the multi-client control module 218 determines whether multi-client support is needed. For example, when the session data 300 from the server 200 includes display data, the multi-client control module 218 can read the setting data 311 to determine whether the display data is to be displayed on one monitor or divided and displayed on multiple monitors. If the display data is to be displayed on one monitor, then the master client 210 can display the display data locally on monitor 350. If the display data is to be divided and displayed on multiple monitors, then the multi-client control module 218 may initiate a multi-client session with one or more slave clients, as discussed below.

If the multi-client control module 218 determines that multi-client support is not needed, then the master client uses local resources to perform actions on the session data 312 and operates in a standalone mode in step 620. For example, local resources of the master client 210 may include the processor 190, machine-readable medium 185 and/or graphics card 111 within the master client 210. Local resources of the master client 210 may also include one or more peripheral devices connected to the master client 210. Peripheral devices may include a monitor 351, a speaker, a printer or other peripheral device connected to the master client 210. For the example where session data 312 includes display data, the master client 210 may use the graphics card 111 and local monitor 350 to display the display data. In this example, the master client 210 uses local resources to render the display data in visual form.

In step 630, the multi-client control module 218 creates a session data proxy 280 and waits for the slave clients to connect to the master client 210. The session data proxy 280 may send setting data 360 to a slave client 220 instructing the slave client 220 to connect to the master client 210 to receive session data 314. The slave client 220 may be any of the slave clients 321, 322 and 323 in Figure 3.

In step 640, the multi-client control module 218 determines whether the slave client 220 is connected to the master client 210. If the slave client 220 is connected, then the multi-client control module creates a new task to process the session data 312 for the slave client 220 in step 650. For example, if the session data 312 includes a display region of display data to be displayed on a monitor of the slave client, then the task may deliver the display region to the slave client 220 as part of the session data 314 sent to the slave client 220.

In step 660, the multi-control module 218 determines whether the remote access session has ended. If the session has ended, then the process ends. Otherwise, the process returns to step 640. If more than one slave client is used, then steps 630 through 660 may be performed for each slave client.

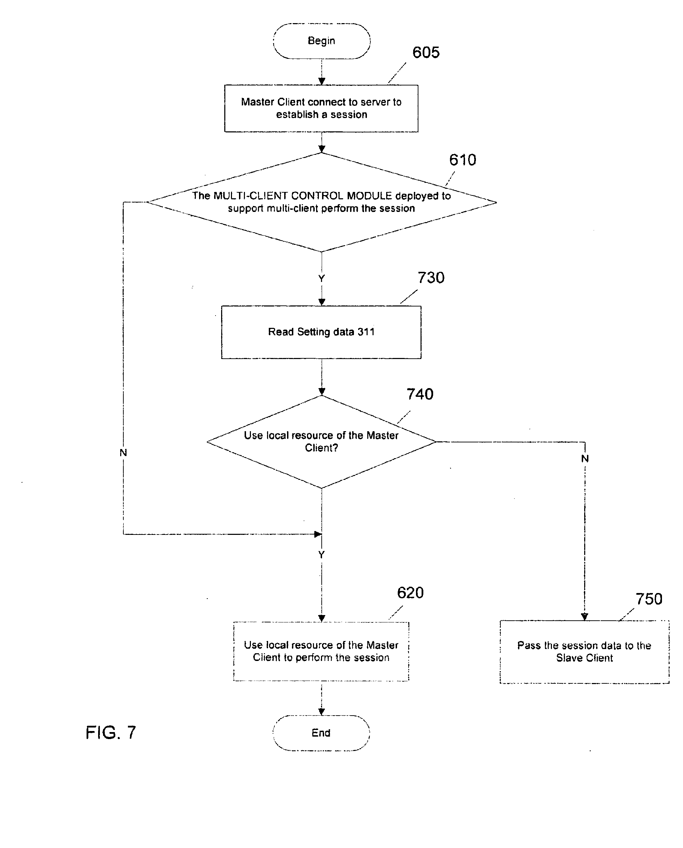

Figure 7 is a flow diagram illustrating a process performed by the master client 210 for processing session data 312 according to an aspect of the invention. The process includes steps 605 and 610, the same as before. In step 605, the client remote access module 230 connects to the server 200 to establish a remote access session with the server 200. In step 610, the multi-client control module 218 determines whether multi-client support is needed. If the multi-client control module 218 determines that multi-client support is not needed, then the master client uses local resources to perform actions on the session data 312 in step 620. Otherwise, the master client 210 proceeds to step 730.

In step 730, the multi-client control module 218 reads the setting data 311. In step 740. the multi-client control module 218 determines whether local resources of the master 210 will be used for session data 312. For example, if the setting data 311 include instructions for dividing display data in the session data 312 into display regions, then the multi- client control module 218 determines whether a display region in the session data 312 is to be displayed by the master client 210 or the slave client 220. If the multi-client control module 218 determines that local resources will be used, then the master client uses local resources to perform actions on the session data 312 in step 620. Otherwise, the master client 210 passes the session data 312 to the slave client 220 in step 750.

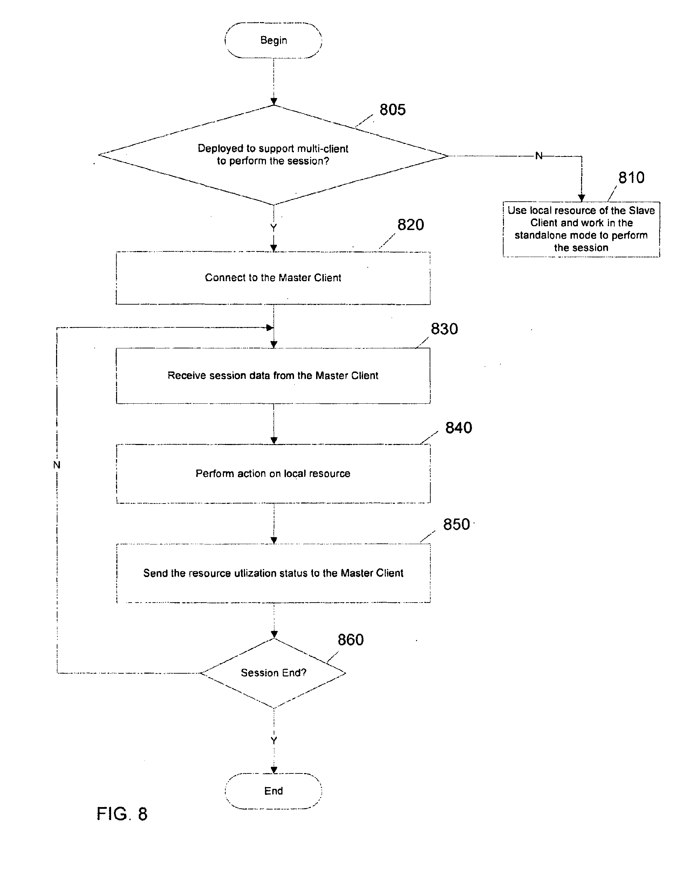

Figure 8 is a flow diagram illustrating a process performed by a slave client 220 according to an aspect of the disclosure.

In step 805, the client remote access module 240 determines whether the slave client 220 is being deployed to support a multi-client session with a master client 210. If the slave client is not being deployed to support a multi-client session, then the client remote access module 240 may connect to a server 200 to establish a remote access session with the server 200 in a standalone mode. In this case, the slave client 220 uses local resources to perform the remote access session in step 810. If the slave client is being used to support a multi-client session, then the client remote access module 240 proceeds to step 820.

In step 820, the client remote access modules 240 connects to the master client 210. Step 820 may correspond to step 530 in Figure 5. In step 830, the client remote access module receives session data 314 from the master client 210. In step 840, the client remote access module 240 performs actions on the received session data 314 using local resources. For example, if the session data 314 includes a display region of display data, then the slave client 220 may display the display-region on a monitor coupled to the slave client 220. Step 840 may correspond to step 540 in Figure 5. In step 850, the client remote access module 240 sends a resource utilization status to the master client 210. Step 850 may correspond to step 545 in Figure 5. In step 860, the client remote access module 240 determines whether the session with the master client 21 0 has ended. If the session has not ended, then the process returns to step 830. Otherwise, the process ends.

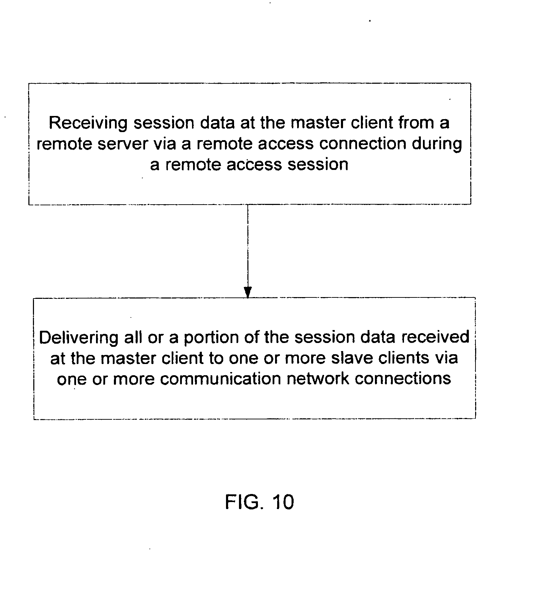

Figure 10 is a flow chart illustrating a process for distributed session data to multiple clients. The process includes receiving session data at a master client from a remote server via a remote access connection during a remote access session in step 1010 and delivering all or a portion of the session data received at the master client to one or more slave clients via one or more communication network connections in step 1020.

Those of skill in the art would appreciate that the various illustrative blocks, modules, elements, components, methods, and algorithms described herein may be implemented as electronic hardware, computer software, or combinations of both. To illustrate this interchangeability of hardware and software, various illustrative blocks, modules, elements, components, methods, and algorithms have been described above generally in terms of their functionality. Whether such functionality is implemented as hardware or software depends upon the particular application and design constraints imposed on the overall system. Skilled artisans may implement the described functionality in varying ways for each particular application.

Various modules and blocks may be arranged differently (e.g., arranged in a different order, or partitioned in a different way) all without departing from the scope of the subject technology. For example, various blocks in a communications module may be implemented in one or more different modules. A communications module, a processor and a memory may be arranged differently. For instance, a proxy, an agent, a client remote access module, and a server remote access module may be stored in a memory or data storage and/or executed by a processor. A processor may include a memory. Furthermore, a multimedia redirection system is not limited to a server-client architecture. For example, a client may be a server and a server may be a client; both client and server may be servers; and both client and server may be clients. Client and server may represent other architectures.

Furthermore, when information is discussed as being received, notified or accepted from/by a module or sent, issued, notified, transmitted, reported, provided or pushed to/from a module, it is understood that the information may be received, notified or accepted from/by the module or sent, issued, notified, transmitted, reported, provided or pushed to/from the module either directly or indirectly.

The previous description is provided to enable any person skilled in the art to practice the various aspects described herein. Various modifications to these aspects will be readily apparent to those skilled in the art, and the generic principles defined herein may be applied to other aspects. Thus, the claims are not intended to be limited to the aspects shown herein, but is to be accorded the full scope consistent with the language claims, wherein reference to an element in the singular is not intended to mean "one and only one" unless specifically so stated, but rather "one or more." Unless specifically stated otherwise, the term "some" refers to one or more. Pronouns in the masculine (e.g., his) include the feminine and neuter gender (e.g., her and its) and vice versa. Headings and subheadings, if any, are used for convenience only and do not limit the disclosure.

All structural and functional equivalents to the elements of the various aspects described throughout this disclosure that are known or later come to be known to those of ordinary skill in the art are expressly incorporated herein by reference and are intended to be encompassed by the claims.

## Claims

1. A master client (210), comprising:
a remote access module (230) configured to receive session data (303) from a server (200) via a remote access connection (330) during a remote access session with the server (200); and
a multi-client control module (218) configured to deliver all or a portion of the session data (303, 312; 314) received from the server (200) to client remote access modules (240) of slave clients (321, 322; 323) using a remote access protocol via second remote access connections arranged in parallel, each of the slave clients (321, 322; 323) associated with a corresponding one of the client remote access modules (240) and a corresponding one of the second remote access connections,
wherein the session data (303; 312; 314) received from the server (200) includes display data (306; 307; 308; 309; 405),
wherein the multi-client control module (218) is configured to determine whether multi-client support is needed,
wherein if the display data (306; 307; 308; 309; 405) is to be displayed on multiple monitors (350; 351; 352; 353), then the multi-client control module (218) is configured to divide the display data (306; 307; 308; 309; 405) into a plurality of display regions (410; 411; 412; 413), to display one (410) of the plurality of display regions (410; 411; 412; 413) on a monitor (350) of the master client (210), and to deliver, using the remote access protocol via the second remote access connections arranged in parallel, the other (411; 412; 413) of the plurality of display regions (410; 411; 412; 413) to the client remote access modules (240) of the slave clients (321, 322; 323) for display on monitors (351; 352; 353) of the slave clients (321, 322; 323)
wherein if the display data (306; 307; 308; 309; 405) is to be displayed on one monitor, then the multi-client control module (218) is configured to display all of the display data (306; 307; 308; 309; 405) on the monitor (350) of the master client (210) in a standalone mode.

2. The master client (210) of claim 1, wherein the remote access module (230) is configured to initiate the remote access session with the server (200).

3. The master client (210) of claim 2, wherein the remote access module (230) is configured to maintain the remote access connection (300) with the server (200) during the remote access session.

4. The master client (210) of claim 1, wherein the session data (303) includes display data (306; 307; 308; 309; 405) of a desktop or an application running on the server (200).

5. The master client (210) of claim 1, wherein the second remote access connections include a WAN connection.

6. The master client (210) of claim 1, wherein the multi-client control module (218) is configured to determine whether the slave clients (321, 322; 323) are connected to the master client (210),
wherein if the slave clients (321; 322; 323) are connected, then the multi-client control module (218) is configured to create a new task to process the session data (303; 312) for the slave clients (321; 322; 323),
wherein if the session data (303, 312; 314) includes the other (411; 412; 413) of the plurality of display regions (410; 411; 412; 413) to be displayed on the monitors (351; 352; 353) of the slave clients (321; 322; 323), then the multi-client control module (218) is configured to deliver the other (411; 412; 413) of the plurality of display regions (410; 411; 412; 413) to the client remote access modules (240) of the slave clients (321; 322; 323).

7. The master client (210) of claim 1, wherein the multi-client control module (218) is configured to receive response to the session data (314) from the slave clients (321; 322; 323) based on the remote access protocol.

8. The master client (210) of claim 1, wherein the multi-client control module (218) is configured to maintain the second remote access connections with the slave clients (321, 322; 323).

9. The master client (210) of claim 1, wherein the multi-client control module (218) is configured to pass setting data (360; 361; 362) to each of the slave clients (321, 322; 323).

10. The master client (210) of claim 9, wherein the setting data (360; 361; 362) to each of the slave clients (321, 322; 323) includes a network address of the master client (210).

11. The master client of claim 9, wherein the setting data (360; 361; 362) to each of the slave clients (321, 322; 323) can be set or overwritten by the multi-client control module (218) or other mechanism.

12. The master client (210) of claim 1, wherein the multi-client control module (218) comprises a session data proxy (280) configured to send setting data (360; 361; 362) to the slave clients (321, 322; 323) through a file transfer protocol (FTP) server instructing the slave clients (321, 322; 323) to setup connection to the master client (210) and to receive all or a portion of the session data (312; 314) from the master client (210).

13. The master client (210) of claim 1, wherein the display data (306; 307; 308; 309; 405) is of a desktop or an application running on the server (200) during the remote access session.

14. The master client (210) of claim 1, wherein the remote access module (230) is configured to receive next session data (314), and
wherein the multi-client control module (218) is configured to divide the next session data (314) received from the server (200) into portions, to render one of the portions of the next session data (314) using a local resource of the master client (210), and to deliver the other of the portions of the next session data (314) to the client remote access modules (240) of the slave clients (321, 322; 323) for rendering the other of the portions of the next session data (314) using resources of the slave clients (321, 322; 323).

15. A multiple client control system comprising:
the master client (210) of claim 1 and
slave clients (321, 322; 323),
wherein each of the slave clients (321, 322; 323) comprises:
a corresponding one of the client remote access modules (240) configured to connect to the master client (210) via a corresponding one of the second remote access connections that is separate from the remote access connection (300) between the master client (210) and the server (200).

16. The multiple client control system of claim 15, wherein each of the client remote access modules (240) is configured to determine whether a corresponding one of the slave clients (321, 322; 323) is being deployed to support a multi-client session, and
wherein if the corresponding one of the slave clients (321, 322; 323) is not being deployed to support the multi-client session, then the client remote access module (240) of the corresponding one of the slave clients (321, 322; 323) is configured to connect to the server (200) to establish a second remote access session with the server (200) in a standalone mode.

17. The multiple client control system of claim 16, wherein if the corresponding one of the slave clients (321, 322; 323) is being deployed to support the multi-client session, the client remote access module (240) of the corresponding one of the slave clients (321, 322; 323) is configured to connect to the master client (210), to receive all or a portion of the session data (312; 314) from the master client (210), to perform actions on the session data (312; 314) received from the master client (210) using local resources, and
wherein if the corresponding one of the slave clients (321, 322; 323) is being deployed to support the multi-client session, the client remote access module (240) of the corresponding one of the slave clients (321, 322; 323) is configured to send a resource utilization status to the master client (210) and to determine whether the multi-client session with the master client (210) has ended.

18. The multiple client control system of claim 15, wherein the multiple client control system comprises a file transfer protocol (FTP) server,
wherein the multi-client control module (218) comprises a session data proxy (280) configured to send setting data to the slave clients (321, 322; 323) through the file transfer protocol (FTP) server instructing the slave clients (321, 322; 323) to setup connection to the master client (210) and to receive all or a portion of the session data (312; 314) from the master client (210), and
wherein the file transfer protocol (FTP) server is configured to store the setting data (311).

19. A method, comprising:
receiving session data (303) at a master client (210) from a remote server (200) via a remote access connection during a remote access session, the session data (303) including display data (306; 307; 308; 309; 405);
delivering all or a portion of the session data (303, 312; 314) received at the master client (210) to client remote access modules (240) of slave clients (321, 322; 323) using a remote access protocol via second remote access connections arranged in parallel, each of the slave clients (321, 322; 323) associated with a corresponding one of the client remote access modules (240) and a corresponding one of the second remote access connections;
determining whether multi-client support is needed;
if the display data (306; 307; 308; 309; 405) is to be displayed on multiple monitors (350; 351; 352; 353), then
dividing the display data (306; 307; 308; 309; 405) into a plurality of display regions (410; 411; 412; 413),
displaying one (410) of the plurality of display regions (410; 411; 412; 413) on a monitor of the master client (210), and
delivering, using the remote access protocol via the second remote access connections arranged in parallel, the other (411; 412; 413) of the plurality of display regions (411; 412; 413) to the client remote access modules (240) of the slave clients (321, 322; 323) for display on monitors (351; 352; 353) of the slave clients (321, 322; 323); and
if the display data (306; 307; 308; 309; 405) is to be displayed on one monitor, then displaying all of the display data (306; 307; 308; 309; 405) on the monitor (350) of the master client (210).

20. The method of claim 19, further comprising:
sending setting data (360; 361; 362) to the slave clients (321, 322; 323) through a file transfer protocol (FTP) server instructing the slave clients (321, 322; 323) to setup connection to the master client (210) and to receive all or a portion of the session data (312; 314) from the master client (210).

21. The method of claim 19, further comprising:
receiving the other (411; 412; 413) of the plurality of display regions (410; 411; 412; 413) at the client remote access modules (240) of the slave clients (321, 322; 323); and
displaying the received other (411; 412; 413) of the plurality of display regions (410; 411; 412; 413) on the monitors (351; 352; 353) of the slave clients (321, 322; 323).

22. The method of claim 19, further comprising:
receiving next session data (312; 314) at the master client (210);
dividing the next session data (303; 312; 314) received from the server (200) into portions;
rendering one of the portions of the next session data (312; 314) using a local resource of the master client (210); and
delivering the other of the portions of the next session data (314) to the client remote access modules (240) of the slave clients (321, 322; 323).

23. The method of claim 22, further comprising:
receiving the other of the portions of the next session data (314) at the client remote access modules (240) of the slave clients (321, 322; 323); and
rendering the received other of the portions of the next session data (314) using local resources of the slave clients (321, 322; 323).

24. A system, comprising:
means for receiving session data (303) at a master client (210) from a remote server (200) via a remote access connection during a remote access session, the session data (303) including display data (306; 307; 308; 309; 405);
means for delivering all or a portion of the session data (303, 312; 314) received at the master client (210) to client remote access modules (240) of slave clients (321, 322; 323) using a remote access protocol via second remote access connections arranged in parallel, each of the slave clients (321, 322; 323) associated with a corresponding one of the client remote access modules (240) and a corresponding one of the second remote access connections;
means for determining whether multi-client support is needed;
means for, if the display data (306; 307; 308; 309; 405) is to be displayed on multiple monitors (350; 351; 352; 353),
dividing the display data (306; 307; 308; 309; 405) into a plurality of display regions (410; 411; 412; 413),
displaying one of the plurality of display regions (410) on a monitor (350) of the master client (210), and
delivering, using the remote access protocol via the second remote access connections arranged in parallel, the other of the plurality of display regions to the client remote access modules (240) of the slave clients (321, 322; 323) for display on monitors (351; 352; 353) of the slave clients (321, 322; 323); and
means for, if the display data (306; 307; 308; 309; 405) is to be displayed on one monitor, displaying all of the display data (306; 307; 308; 309; 405) on the monitor (350) of the master client (210).

25. The system of claim 24, further comprising:
means for sending setting data to the slave clients (321, 322; 323) through a file transfer protocol (FTP) server instructing the slave clients (321, 322; 323) to setup connection to the master client (210) and to receive all or a portion of the session data (303, 312; 314) from the master client (210).

26. The system of claim 24, further comprising:
means for receiving the other of the plurality of display regions (411; 412; 413) at the client remote access modules (240) of the slave clients (321, 322; 323); and
means for displaying the received other (411; 412; 413) of the plurality of display regions (410; 411; 412; 413) on the monitors (351; 352; 353) of the slave clients (321, 322; 323).

27. The system of claim 24, further comprising:
means for receiving next session data (303; 312; 314) at the master client (210);
means for dividing the next session data (303; 312; 314) received from the server (200) into portions;
means for rendering one of the portions of the next session data (312; 314) using a local resource of the master client (210); and
means for delivering the other of the portions of the next session data (314) to the client remote access modules (240) of the slave clients (321, 322; 323).

28. The system of claim 27, further comprising:
means for receiving the other of the portions of the next session data (314) at the client remote access modules (240) of the slave clients (321, 322; 323); and
means for rendering the received other of the portions of the next session data (314) using local resources of the slave clients (321, 322; 323).

29. A machine-readable medium having instructions stored thereon, the instructions being executable by one or more processors and the instructions comprising code for:
receiving session data (303) at a master client (210) from a remote server (200) via a remote access connection during a remote access session, the session data (303) including display data (306; 307; 308; 309; 405); delivering all or a portion of the session data (303, 312; 314) received at the master client (210) to client remote access modules (240) of slave clients (321, 322; 323) using a remote access protocol via second remote access connections arranged in parallel, each of the slave clients (321, 322; 323) associated with a corresponding one of the client remote access modules (240) and a corresponding one of the second remote access connections;
determining whether multi-client support is needed;
if the display data (306; 307; 308; 309; 405) is to be displayed on multiple monitors (350; 351; 352; 353), then
dividing the display data (306; 307; 308; 309; 405) into a plurality of display regions (410; 411; 412; 413),
displaying one of the plurality of display regions (410) on a monitor (350) of the master client (210), and
delivering, using the remote access protocol via the second remote access connections arranged in parallel, the other of the plurality of display regions (411; 412; 413) to the client remote access modules (240) of the slave clients (321, 322; 323) for display on monitors (351; 352; 353) of the slave clients (321, 322; 323); and
if the display data (306; 307; 308; 309; 405) is to be displayed on one monitor, then displaying all of the display data (306; 307; 308; 309; 405) on the monitor (350) of the master client (210).

30. The machine-readable medium of claim 29, wherein the instructions further comprise code for:
sending setting data to the slave clients (321, 322; 323) through a file transfer protocol (FTP) server instructing the slave clients (321, 322; 323) to setup connection to the master client (210) and to receive all or a portion of the session data (303, 312; 314) from the master client (210).

31. The machine-readable medium of claim 29, wherein the instructions further comprise code for:
receiving next session data (303; 312; 314) at the master client (210);
dividing the next session data (303; 312; 314) received from the server (200) into portions;
rendering one of the portions of the next session data (303; 312; 314) using a local resource of the master client (210); and
delivering the other of the portions of the next session data (314) to the client remote access modules (240) of the slave clients (321, 322; 323).

## Patentansprüche

1. Master-Client (210), Folgendes umfassend:
ein Fernzugriffsmodul (230), das ausgestaltet ist, Sitzungsdaten (303) von einem Server (200) über eine Fernzugriffsverbindung (330) während einer Fernzugriffssitzung mit dem Server (200) zu empfangen; und
ein Modul (218) zur Steuerung mehrerer Clients, das ausgestaltet ist, alle oder einen Teil der Sitzungsdaten (303, 312; 314), die von dem Server (200) empfangen werden, unter Verwendung eines Fernzugriffsprotokolls über zweite Fernzugriffsverbindungen, die parallel angeordnet sind, an Client-Fernzugriffsmodule (240) von Slave-Clients (321, 322; 323) zu liefern, wobei jeder der Slave-Clients (321, 322; 323) einem entsprechenden der Client-Femzugriffsmodule (240) und einem entsprechenden der zweiten Fernzugriffsverbindungen zugehörig ist,
wobei die Sitzungsdaten (303; 312; 314), die von dem Server (200) empfangen werden, Anzeigedaten (306; 307; 308; 309; 405) umfassen,
wobei das Modul (218) zur Steuerung mehrerer Clients ausgestaltet ist, zu bestimmen, ob die Unterstützung mehrerer Clients benötigt wird,
wobei, wenn die Anzeigedaten (306; 307; 308; 309; 405) auf mehreren Monitoren (350; 351; 352; 353) anzuzeigen sind, das Modul (218) zur Steuerung mehrerer Clients dann ausgestaltet ist, die Anzeigedaten (306; 307; 308; 309; 405) in eine Mehrzahl Anzeigebereiche (410; 411; 412; 413) zu unterteilen, um einen (410) der Mehrzahl Anzeigebereiche (410; 411; 412; 413) auf einem Monitor (350) des Master-Clients (210) anzuzeigen, und um unter Verwendung des Fernzugriffsprotokolls über die zweiten Fernzugriffsverbindungen, die parallel angeordnet sind, die anderen (411; 412; 413) der Mehrzahl Anzeigebereiche (410; 411; 412; 413) an die Client-Fernzugriffsmodule (240) der Slave-Clients (321, 322; 323) zur Anzeige auf Monitoren (351; 352; 353) der Slave-Clients (321, 322; 323) zu liefern,
wobei, wenn die Anzeigedaten (306; 307; 308; 309; 405) auf einem Monitor anzuzeigen sind, das Modul (218) zur Steuerung mehrerer Clients dann ausgestaltet ist, alle der Anzeigedaten (306; 307; 308; 309; 405) auf dem Monitor (350) des Master-Clients (210) in einem Einzelplatzmodus anzuzeigen.

2. Master-Client (210) nach Anspruch 1, wobei das Fernzugriffsmodul (230) ausgestaltet ist, die Fernzugriffssitzung mit dem Server (200) einzuleiten.

3. Master-Client (210) nach Anspruch 2, wobei das Fernzugriffsmodul (230) ausgestaltet ist, die Fernzugriffsverbindung (300) mit dem Server (200) während der Fernzugriffssitzung aufrechtzuhalten.

4. Master-Client (210) nach Anspruch 1, wobei die Sitzungsdaten (303) Anzeigedaten (306; 307; 308; 309; 405) eines Desktops oder einer Anwendung, die auf dem Server (200) läuft, umfassen.

5. Master-Client (210) nach Anspruch 1, wobei die zweiten Fernzugriffsverbindungen eine WAN-Verbindung umfassen.

6. Master-Client (210) nach Anspruch 1, wobei das Modul (218) zur Steuerung mehrerer Clients ausgestaltet ist, zu bestimmen, ob die Slave-Clients (321, 322; 323) mit dem Master-Client (210) verbunden sind,
wobei, wenn die Slave-Clients (321; 322; 323) verbunden sind, das Modul (218) zur Steuerung mehrerer Clients dann ausgestaltet ist, einen neuen Task für die Slave-Clients (321; 322; 323) zu erstellen, die Sitzungsdaten (303; 312) zu verarbeiten,
wobei, wenn die Sitzungsdaten (303, 312; 314) die anderen (411; 412; 413) der Mehrzahl Anzeigebereiche (410; 411; 412; 413), die auf den Monitoren (351; 352; 353) der Slave-Clients (321; 322; 323) anzuzeigen sind, umfassen, das Modul (218) zur Steuerung mehrerer Clients dann ausgestaltet ist, die anderen (411; 412; 413) der Mehrzahl Anzeigebereiche (410; 411; 412; 413) an die Client-Fernzugriffsmodule (240) der Slave-Clients (321; 322; 323) zu liefern.

7. Master-Client (210) nach Anspruch 1, wobei das Modul (218) zur Steuerung mehrerer Clients ausgestaltet ist, eine Antwort auf die Sitzungsdaten (314) von den Slave-Clients (321; 322; 323) auf Grundlage des Fernzugriffsprotokolls zu empfangen.

8. Master-Client (210) nach Anspruch 1, wobei das Modul (218) zur Steuerung mehrerer Clients ausgestaltet ist, die zweiten Fernzugriffsverbindungen mit den Slave-Clients (321, 322; 323) aufrechtzuerhalten.

9. Master-Client (210) nach Anspruch 1, wobei das Modul (218) zur Steuerung mehrerer Clients ausgestaltet ist, Einstellungsdaten (360; 361; 362) an jeden der Slave-Clients (321, 322; 323) weiterzuleiten.

10. Master-Client (210) nach Anspruch 9, wobei die Einstellungsdaten (360; 361; 362) an jeden der Slave-Clients (321, 322; 323) eine Netzwerkadresse des Master-Clients (210) umfassen.

11. Master-Client nach Anspruch 9, wobei die Einstellungsdaten (360; 361; 362) für jeden der Slave-Clients (321, 322; 323) durch das Modul (218) zur Steuerung mehrerer Clients oder einen anderen Mechanismus eingestellt oder überschrieben werden können.

12. Master-Client (210) nach Anspruch 1, wobei das Modul (218) zur Steuerung mehrerer Clients einen Sitzungsdaten-Proxy (280) umfasst, der ausgestaltet ist, Einstellungsdaten (360; 361; 362) an die Slave-Clients (321, 322; 323) durch einen Dateiübertragungsprotokoll (File Transfer Protocol, FTP)-Server zu senden, die die Slave-Clients (321, 322; 323) anweisen, eine Verbindung zum Master-Client (210) aufzubauen und alle oder einen Teil der Sitzungsdaten (312; 314) von dem Master-Client (210) zu empfangen.

13. Master-Client (210) nach Anspruch 1, wobei die Anzeigedaten (306; 307; 308; 309; 405) von einem Desktop oder einer Anwendung sind, die auf dem Server (200) während der Fernzugriffssitzung läuft.

14. Master-Client (210) nach Anspruch 1, wobei das Fernzugriffsmodul (230) ausgestaltet ist, die nächsten Sitzungsdaten (314) zu empfangen, und
wobei das Modul (218) zur Steuerung mehrerer Clients ausgestaltet ist, die nächsten Sitzungsdaten (314), die von dem Server (200) empfangen werden, in Teile zu unterteilen, um einen der Teile der nächsten Sitzungsdaten (314) unter Verwendung einer lokalen Ressource des Master-Clients (210) darzustellen, und die anderen der Teile der nächsten Sitzungsdaten (314) an die Client-Fernzugriffsmodule (240) der Slave-Clients (321, 322; 323) zur Darstellung der anderen der Teile der nächsten Sitzungsdaten (314) unter Verwendung der Ressourcen der Slave-Clients (321, 322; 323) zu liefern.

15. System zur Steuerung mehrerer Clients, Folgendes umfassend:
den Master-Client (210) nach Anspruch 1 und
Slave-Clients (321, 322; 323),
wobei jeder der Slave-Clients (321, 322; 323) Folgendes umfasst:
ein entsprechendes der Client-Fernzugriffsmodule (240), die ausgestaltet sind, sich mit dem Master-Client (210) über jeweils eine entsprechende der zweiten Fernzugriffsverbindungen zu verbinden, die von der Fernzugriffsverbindung (300) zwischen dem Master-Client (210) und dem Server (200) getrennt ist.

16. System zur Steuerung mehrerer Clients nach Anspruch 15, wobei jedes der Client-Fernzugriffsmodule (240) ausgestaltet ist, zu bestimmen, ob jeweils ein entsprechender der Slave-Clients (321, 322; 323) eingesetzt wird, um eine Sitzung mehrerer Clients zu unterstützen, und
wobei, wenn jeweils der entsprechende der Slave-Clients (321, 322; 323) nicht eingesetzt wird, um die Sitzung mehrerer Clients zu unterstützen, das Client-Fernzugriffsmodul (240) des entsprechenden der Slave-Clients (321, 322; 323) dann ausgestaltet ist, sich mit dem Server (200) zu verbinden, um eine zweite Fernzugriffssitzung mit dem Server (200) in einem Einzelplatzmodus aufzubauen.

17. System zur Steuerung mehrerer Clients nach Anspruch 16, wobei, wenn der entsprechende der Slave-Clients (321, 322; 323) eingesetzt wird, um die Sitzung mehrerer Clients zu unterstützen, das Client-Fernzugriffsmodul (240) des entsprechenden der Slave-Clients (321, 322; 323) ausgestaltet ist, sich mit dem Master-Client (210) zu verbinden, um alle oder einen Teil der Sitzungsdaten (312; 314) von dem Master-Client (210) zu empfangen, um Aktionen an den Sitzungsdaten (312; 314), die von dem Master-Client (210) unter Verwendung lokaler Ressourcen empfangen werden, durchzuführen; und
wobei, wenn der entsprechende der Slave-Clients (321, 322; 323) eingesetzt wird, um die Sitzung mehrerer Clients zu unterstützen, das Client-Femzugriffsmodul (240) des entsprechenden der Slave-Clients (321, 322; 323) ausgestaltet ist, einen Ressourcen-Nutzungsstatus an den Master-Client (210) zu senden und zu bestimmen, ob die Sitzung mehrerer Clients mit dem Master-Client (210) beendet worden ist.

18. System zur Steuerung mehrerer Clients nach Anspruch 15, wobei das System zur Steuerung mehrerer Clients einen Dateiübertragungsprotokoll (FTP)-Server umfasst,
wobei das Modul (218) zur Steuerung mehrerer Clients einen Sitzungsdaten-Proxy (280) umfasst, der ausgestaltet ist, Einstellungsdaten an die Slave-Clients (321, 322; 323) durch den Dateiübertragungsprotokoll (FTP)-Server zu senden, die die Slave-Clients (321, 322; 323) anweisen, Verbindung mit dem Master-Client (210) aufzubauen und alle oder einen Teil der Sitzungsdaten (312; 314) von dem Master-Client (210) zu empfangen, und
wobei der Dateiübertragungsprotokoll (FTP)-Server ausgestaltet ist, die Einstellungsdaten (311) zu speichern.

19. Verfahren, Folgendes umfassend:
Empfangen von Sitzungsdaten (303) an einem Master-Client (210) von einem Remote-Server (200) über eine Fernzugriffsverbindung während einer Fernzugriffssitzung, wobei die Sitzungsdaten (303) Anzeigedaten (306; 307; 308; 309; 405) umfassen;
Liefern aller oder eines Teils der Sitzungsdaten (303, 312; 314), die an dem Master-Client (210) empfangen werden, an Client-Fernzugriffsmodule (240) von Slave-Clients (321, 322; 323) unter Verwendung eines Fernzugriffsprotokolls über zweite Fernzugriffsverbindungen, die parallel angeordnet sind, wobei jeder der Slave-Clients (321, 322; 323) einem entsprechenden der Client-Fernzugriffsmodule (240) und einem entsprechenden der zweiten Fernzugriffsverbindungen zugehörig ist;
Bestimmen, ob Unterstützung mehrerer Clients benötigt wird;
ob die Anzeigedaten (306; 307; 308; 309; 405) auf mehreren Monitoren (350; 351; 352; 353) anzuzeigen sind, dann
Teilen der Anzeigedaten (306; 307; 308; 309; 405) in eine Mehrzahl Anzeigebereiche (410; 411; 412; 413),
Anzeigen eines (410) der Mehrzahl Anzeigebereiche (410; 411; 412; 413) auf einem Monitor des Master-Clients (210), und
Liefern, unter Verwendung des Fernzugriffsprotokolls über die zweiten Fernzugriffsverbindungen, die parallel angeordnet sind, der anderen (411; 412; 413) der Mehrzahl Anzeigebereiche (411; 412; 413) an die Client-Fernzugriffsmodule (240) der Slave-Clients (321, 322; 323) zur Anzeige auf Monitoren (351; 352; 353) der Slave-Clients (321, 322; 323); und
wenn die Anzeigedaten (306; 307; 308; 309; 405) auf einem Monitor anzuzeigen sind, dann Anzeigen aller der Anzeigedaten (306; 307; 308; 309; 405) auf dem Monitor (350) des Master-Clients (210).

20. Verfahren nach Anspruch 19, überdies Folgendes umfassend:
Senden der Einstellungsdaten (360; 361; 362) an die Slave-Clients (321, 322; 323) durch einen Dateiübertragungsprotokoll (FTP)-Server, die die Slave-Clients (321, 322; 323) anweisen, Verbindung zu dem Master-Client (210) aufzubauen und alle oder einen Teil der Sitzungsdaten (312; 314) von dem Master-Client (210) zu empfangen.

21. Verfahren nach Anspruch 19, überdies umfassend:
Empfangen der anderen (411; 412; 413) der Mehrzahl Anzeigebereiche (410; 411; 412; 413) an den Client-Fernzugriffsmodulen (240) der Slave-Clients (321, 322; 323); und
Anzeigen der empfangenen anderen (411; 412; 413) der Mehrzahl Anzeigebereiche (410; 411; 412; 413) auf den Monitoren (351; 352; 353) der Slave-Clients (321, 322; 323).

22. Verfahren nach Anspruch 19, überdies Folgendes umfassend:
Empfangen der nächsten Sitzungsdaten (312; 314) an dem Master-Client (210);
Unterteilen der nächsten Sitzungsdaten (303; 312; 314), die von dem Server (200) empfangen werden, in Teile;
Darstellen eines der Teile der nächsten Sitzungsdaten (312; 314) unter Verwendung einer lokalen Ressource des Master-Clients (210); und
Liefern der anderen der Teile der nächsten Sitzungsdaten (314) an die Client-Fernzugriffsmodule (240) der Slave-Clients (321, 322; 323).

23. Verfahren nach Anspruch 22, überdies Folgendes umfassend:
Empfangen der anderen Teile der nächsten Sitzungsdaten (314) an den Client-Fernzugriffsmodulen (240) der Slave-Clients (321, 322; 323); und
Darstellen der empfangenen anderen der Teile der nächsten Sitzungsdaten (314) unter Verwendung lokaler Ressourcen der Slave-Clients (321, 322; 323).

24. System, Folgendes umfassend:
Mittel zum Empfangen von Sitzungsdaten (303) an einem Master-Client (210) von einem Remote-Server (200) über eine Fernzugriffsverbindung während einer Fernzugriffssitzung, wobei die Sitzungsdaten (303) Anzeigedaten (306; 307; 308; 309; 405) umfassen;
Mittel zum Liefern aller oder eines Teils der Sitzungsdaten (303, 312; 314), die an dem Master-Client (210) empfangen werden, an Client-Fernzugriffsmodule (240) von Slave-Clients (321, 322; 323) unter Verwendung eines Fernzugriffsprotokolls über zweite Fernzugriffsverbindungen, die parallel angeordnet sind, wobei jeder der Slave-Clients (321, 322; 323) einem entsprechenden der Client-Fernzugriffsmodule (240) und einem entsprechenden der zweiten Fernzugriffsverbindungen zugehörig ist;
Mittel zum Bestimmen, ob Unterstützung mehrerer Clients benötigt wird;
Mittel, wenn die Anzeigedaten (306; 307; 308; 309; 405) auf mehreren Monitoren (350; 351; 352; 353) anzuzeigen sind, zum
Unterteilen der Anzeigedaten (306; 307; 308; 309; 405) in eine Mehrzahl Anzeigebereiche (410; 411; 412; 413),
Anzeigen eines der Mehrzahl Anzeigebereiche (410) auf einem Monitor (350) des Master-Clients (210), und
Liefern, unter Verwendung des Fernzugriffsprotokolls über die zweiten Fernzugriffsverbindungen, die parallel angeordnet sind, der anderen der Mehrzahl Anzeigebereiche an die Client-Fernzugriffsmodule (240) der Slave-Clients (321, 322; 323) zum Anzeigen auf Monitoren (351; 352; 353) der Slave-Clients (321, 322; 323); und
Mittel, wenn die Anzeigedaten (306; 307; 308; 309; 405) auf einem Monitor anzuzeigen sind, zum Anzeigen aller Anzeigedaten (306; 307; 308; 309; 405) auf dem Monitor (350) des Master-Clients (210).

25. System nach Anspruch 24, überdies umfassend:
Mittel zum Senden von Einstellungsdaten an die Slave-Clients (321, 322; 323) durch einen Dateiübertragungsprotokoll (FTP)-Server, die die Slave-Clients (321, 322; 323) anweisen, Verbindung mit dem Master-Client (210) aufzubauen und alle oder einen Teil der Sitzungsdaten (303; 312; 314) von dem Master-Client (210) zu empfangen.

26. System nach Anspruch 24, überdies Folgendes umfassend:
Mittel zum Empfangen der anderen der Mehrzahl Anzeigebereiche (411; 412; 413) an den Client-Fernzugriffsmodulen (240) der Slave-Clients (321, 322; 323); und
Mittel zum Anzeigen der empfangenen anderen (411; 412; 413) der Mehrzahl Anzeigebereiche (410; 411; 412; 413) auf den Monitoren (351; 352; 353) der Slave-Clients (321, 322; 323).

27. System nach Anspruch 24, überdies Folgendes umfassend:
Mittel zum Empfangen nächster Sitzungsdaten (303; 312; 314) an dem Master-Client (210);
Mittel zum Unterteilen der nächsten Sitzungsdaten (303; 312; 314), die von dem Server (200) empfangen werden, in Teile;
Mittel zum Darstellen eines der Teile der nächsten Sitzungsdaten (312; 314) unter Verwendung einer lokalen Ressource des Master-Clients (210); und
Mittel zum Liefern der anderen der Teile der nächsten Sitzungsdaten (314) an die Client-Fernzugriffsmodule (240) der Slave-Clients (321, 322; 323).

28. System nach Anspruch 27 überdies Folgendes umfassend:
Mittel zum Empfangen der anderen der Teile der nächsten Sitzungsdaten (314) an den Client-Fernzugriffsmodulen (240) der Slave-Clients (321, 322; 323); und
Mittel zum Darstellen der empfangenen anderen der Teile der nächsten Sitzungsdaten (314) unter Verwendung lokaler Ressourcen der Slave-Clients (321, 322; 323).

29. Maschinenlesbares Medium, das Anweisungen aufweist, die darauf gespeichert sind, wobei die Anweisungen von einem oder mehreren Prozessoren ausführbar sind und die Anweisungen Code für Folgendes umfassen:
Empfangen von Sitzungsdaten (303) an einem Master-Client (210) von einem Remote-Server (200) über eine Fernzugriffsverbindung während einer Fernzugriffssitzung, wobei die Sitzungsdaten (303) Anzeigedaten (306; 307; 308; 309; 405) umfassen; Liefern aller oder eines Teils der Sitzungsdaten (303, 312; 314), die an einem Master-Client (210) empfangen werden, an Client-Fernzugriffsmodule (240) von Slave-Clients (321, 322; 323) unter Verwendung eines Fernzugriffsprotokolls über zweite Fernzugriffsverbindungen, die parallel angeordnet sind, wobei jeder der Slave-Clients (321, 322; 323) einem entsprechenden der Client-Fernzugriffsmodule (240) und einer entsprechenden der zweiten Fernzugriffsverbindungen zugehörig ist;
Bestimmen, ob Unterstützung mehrerer Clients benötigt wird;
ob die Anzeigedaten (306; 307; 308; 309; 405) auf mehreren Monitoren (350; 351; 352; 353) anzuzeigen sind, dann
Unterteilen der Anzeigedaten (306; 307; 308; 309; 405) in eine Mehrzahl Anzeigebereiche (410; 411; 412; 413),
Anzeigen eines der Mehrzahl Anzeigebereiche (410) auf einem Monitor (350) des Master-Clients (210), und
Liefern, unter Verwendung des Fernzugriffsprotokolls über die zweiten Fernzugriffsverbindungen, die parallel angeordnet sind, der anderen der Mehrzahl Anzeigebereiche (411; 412; 413) an die Client-Fernzugriffsmodule (240) der Slave-Clients (321, 322; 323) zum Anzeigen auf Monitoren (351; 352; 353) der Slave-Clients (321, 322; 323); und
wenn die Anzeigedaten (306; 307; 308; 309; 405) auf einem Monitor anzuzeigen sind, dann Anzeigen aller der Anzeigedaten (306; 307; 308; 309; 405) auf dem Monitor (350) des Master-Clients (210).

30. Maschinenlesbares Medium nach Anspruch 29, wobei die Anweisungen überdies Code für Folgendes umfassen:
Senden von Einstellungsdaten an die Slave-Clients (321, 322; 323) durch einen Dateiübertragungsprotokoll (FTP)-Server, die die Slave-Clients (321, 322; 323) anweisen, Verbindung mit dem Master-Client (210) aufzubauen und alle oder einen Teil der Sitzungsdaten (303, 312; 314) von dem Master-Client (210) zu empfangen.

31. Maschinenlesbares Medium nach Anspruch 29, wobei die Anweisungen überdies Code für Folgendes umfassen:
Empfangen nächster Sitzungsdaten (303; 312; 314) an dem Master-Client (210);
Unterteilen der nächsten Sitzungsdaten (303; 312; 314), die von dem Server (200) empfangen werden, in Teile;
Darstellen eines der Teile der nächsten Sitzungsdaten (303; 312; 314) unter Verwendung einer lokalen Ressource des Master-Clients (210); und Liefern der anderen der Teile der nächsten Sitzungsdaten (314) an die Client-Fernzugriffsmodule (240) der Slave-Clients (321, 322; 323).

## Revendications

1. Client maître (210), comprenant :
un module d'accès à distance (230) configuré pour recevoir des données de session (303) en provenance d'un serveur (200) via une connexion d'accès à distance (330) pendant une session d'accès à distance avec le serveur (200) ; et
un module de contrôle de plusieurs clients (218) configuré pour fournir tout ou partie des données de session (303, 312 ; 314) reçues en provenance du serveur (200) à des modules d'accès à distance de clients (240) de clients esclaves (321, 322 ; 323) à l'aide d'un protocole d'accès à distance via des deuxièmes connexions d'accès à distance agencées en parallèle, chacun des clients esclaves (321, 322; 323) étant associé à un module correspondant des modules d'accès à distance de clients (240) et à une connexion correspondante des deuxièmes connexions d'accès à distance,
dans lequel les données de session (303, 312 ; 314) reçues en provenance du serveur (200) comprennent des données d'affichage (306 ; 307 ; 308 ; 309 ; 405),
dans lequel le module de contrôle de plusieurs clients (218) est configuré pour déterminer si un support de plusieurs clients est nécessaire,
dans lequel, si les données d'affichage (306 ; 307 ; 308 ; 309 ; 405) doivent être affichées sur de multiples moniteurs (350 ; 351 ; 352 ; 353), le module de contrôle de plusieurs clients (218) est configuré pour diviser les données d'affichage (306 ; 307 ; 308 ; 309 ; 405) en une pluralité de régions d'affichage (410 ; 411 ; 412 ; 413), pour afficher une région (410) de la pluralité de régions d'affichage (410 ; 411 ; 412 ; 413) sur un moniteur (350) du client maître (210), et pour fournir, à l'aide du protocole d'accès à distance via les deuxièmes connexions d'accès à distance agencées en parallèle, l'autre région (411 ; 412 ; 413) de la pluralité de régions d'affichage (410 ; 411 ; 412; 413) aux modules d'accès à distance de clients (240) des clients esclaves (321, 322; 323) pour un affichage sur des moniteurs (351 ; 352 ; 353) des clients esclaves (321, 322 ; 323),
dans lequel, si les données d'affichage (306 ; 307 ; 308 ; 309 ; 405) doivent être affichées sur un moniteur, le module de contrôle de plusieurs clients (218) est configuré pour afficher la totalité des données d'affichage (306 ; 307 ; 308 ; 309 ; 405) sur le moniteur (350) du client maître (210) dans un mode autonome.

2. Client maître (210) selon la revendication 1, dans lequel le module d'accès à distance (230) est configuré pour lancer la session d'accès à distance avec le serveur (200).

3. Client maître (210) selon la revendication 2, dans lequel le module d'accès à distance (230) est configuré pour maintenir la connexion d'accès à distance (300) avec le serveur (200) pendant la session d'accès à distance.

4. Client maître (210) selon la revendication 1, dans lequel les données de session (303) incluent des données d'affichage (306 ; 307 ; 308 ; 309 ; 405) d'un bureau ou d'une application tournant sur le serveur (200).

5. Client maître (210) selon la revendication 1, dans lequel les deuxièmes connexions d'accès à distance incluent une connexion WAN.

6. Client maître (210) selon la revendication 1, dans lequel le module de contrôle de plusieurs clients (218) est configuré pour déterminer si les clients esclaves (321, 322 ; 323) sont connectés au client maître (210),
dans lequel, si les clients esclaves (321, 322 ; 323) sont connectés, le module de contrôle de plusieurs clients (218) est configuré pour créer une nouvelle tâche pour traiter les données de session (303, 312) pour les clients esclaves (321, 322 ; 323),
dans lequel, si les données de session (303, 312 ; 314) incluent l'autre région (411 ; 412 ; 413) de la pluralité de régions d'affichage (410 ; 411 ; 412 ; 413) devant être affichées sur les moniteurs (351 ; 352 ; 353) des clients esclaves (321, 322 ; 323), le module de contrôle de plusieurs clients (218) est configuré pour fournir l'autre région (411 ; 412 ; 413) de la pluralité de régions d'affichage (410 ; 411 ; 412 ; 413) aux modules d'accès à distance de clients (240) des clients esclaves (321, 322 ; 323).

7. Client maître (210) selon la revendication 1, dans lequel le module de contrôle de plusieurs clients (218) est configuré pour recevoir la réponse aux données de session (314) en provenance des clients esclaves (321, 322 ; 323) sur la base du protocole d'accès à distance.

8. Client maître (210) selon la revendication 1, dans lequel le module de contrôle de plusieurs clients (218) est configuré pour maintenir les deuxièmes connexions d'accès à distance avec les clients esclaves (321, 322 ; 323).

9. Client maître (210) selon la revendication 1, dans lequel le module de contrôle de plusieurs clients (218) est configuré pour transmettre des données de réglage (360 ; 361 ; 362) à chacun des clients esclaves (321, 322 ; 323).

10. Client maître (210) selon la revendication 9, dans lequel les données de réglage (360 ; 361 ; 362) destinées à chacun des clients esclaves (321, 322 ; 323) incluent une adresse de réseau du client maître (210).

11. Client maître selon la revendication 9, dans lequel les données de réglage (360 ; 361 ; 362) destinées à chacun des clients esclaves (321, 322 ; 323) peuvent être réglées ou écrasées par le module de contrôle de plusieurs clients (218) ou un autre mécanisme.

12. Client maître (210) selon la revendication 1, dans lequel le module de contrôle de plusieurs clients (218) comprend un proxy de données de session (280) configuré pour envoyer des données de réglage (360 ; 361 ; 362) aux clients esclaves (321, 322 ; 323) par le biais d'un serveur de protocole de transfert de fichiers (FTP) donnant l'ordre aux clients esclaves (321, 322 ; 323) d'établir la connexion avec le client maître (210) et recevoir tout ou partie des données de session (312 ; 314) en provenance du client maître (210).

13. Client maître (210) selon la revendication 1, dans lequel les données d'affichage (306 ; 307 ; 308 ; 309 ; 405) sont les données d'un bureau ou d'une application tournant sur le serveur (200) pendant la session d'accès à distance.

14. Client maître (210) selon la revendication 1, dans lequel le module d'accès à distance (230) est configuré pour recevoir des données de session (314) suivantes, et dans lequel le module de contrôle de plusieurs clients (218) est configuré pour diviser en portions les données de session (314) suivantes reçues en provenance du serveur (200), pour rendre une des portions des données de session (314) suivantes à l'aide d'une ressource locale du client maître (210), et pour fournir l'autre des portions des données de session (314) suivantes aux modules d'accès à distance de clients (240) des clients esclaves (321, 322 ; 323) pour rendre l'autre des portions des données de session (314) suivantes à l'aide de ressources des clients esclaves (321, 322 ; 323).

15. Système de contrôle de plusieurs clients, comprenant :
le client maître (210) selon la revendication 1 et
des clients esclaves (321, 322 ; 323),
dans lequel chacun des clients esclaves (321, 322 ; 323) comprend :
un module correspondant des modules d'accès à distance de clients (240) configuré pour se connecter au client maître (210) via une connexion correspondante des deuxièmes connexions d'accès à distance qui est séparée de la connexion d'accès à distance (300) entre le client maître (210) et le serveur (200).

16. Système de contrôle de plusieurs clients selon la revendication 15, dans lequel chacun des modules d'accès à distance de clients (240) est configuré pour déterminer si un client correspondant des clients esclaves (321, 322 ; 323) est en cours de déploiement pour supporter une session de plusieurs clients, et
dans lequel, si le client correspondant des clients esclaves (321, 322 ; 323) n'est pas en cours de déploiement pour supporter la session de plusieurs clients, le module d'accès à distance de clients (240) du client correspondant des clients esclaves (321, 322 ; 323) est configuré pour se connecter au serveur (200) afin d'établir une deuxième session d'accès à distance avec le serveur (200) dans un mode autonome.

17. Système de contrôle de plusieurs clients selon la revendication 16, dans lequel, si le client correspondant des clients esclaves (321, 322 ; 323) est en cours de déploiement pour supporter la session de plusieurs clients, le module d'accès à distance de clients (240) du client correspondant des clients esclaves (321, 322 ; 323) est configuré pour se connecter au client maître (210), pour recevoir tout ou partie des données de session (312 ; 314) en provenance du client maître (210), pour effectuer des actions sur les données de session (312 ; 314) reçues en provenance du client maître (210) à l'aide de ressources locales, et
dans lequel, si le client correspondant des clients esclaves (321, 322 ; 323) est en cours de déploiement pour supporter la session de plusieurs clients, le module d'accès à distance de clients (240) du client correspondant des clients esclaves (321, 322 ; 323) est configuré pour envoyer au client maître (210) un statut d'utilisation de ressource et pour déterminer si la session de plusieurs clients avec le client maître (210) a cessé.

18. Système de contrôle de plusieurs clients selon la revendication 15, dans lequel le système de contrôle de plusieurs clients comprend un serveur de protocole de transfert de fichiers (FTP),
dans lequel le module de contrôle de plusieurs clients (218) comprend un proxy de données de session (280) configuré pour envoyer des données de réglage aux clients esclaves (321, 322 ; 323) par le biais du serveur de protocole de transfert de fichiers (FTP) donnant l'ordre aux clients esclaves (321, 322 ; 323) d'établir la connexion avec le client maître (210) et recevoir tout ou partie des données de session (312 ; 314) en provenance du client maître (210), et
dans lequel le serveur de protocole de transfert de fichiers (FTP) est configuré pour stocker les données de réglage (311).

19. Procédé, comprenant:
la réception de données de session (303) au niveau d'un client maître (210) en provenance d'un serveur (200) distant via une connexion d'accès à distance pendant une session d'accès à distance, les données de session (303) incluant des données d'affichage (306 ; 307 ; 308 ; 309 ; 405) ;
la fourniture de tout ou partie des données de session (303, 312 ; 314) reçues au niveau du client maître (210) à des modules d'accès à distance de clients (240) de clients esclaves (321, 322 ; 323) à l'aide d'un protocole d'accès à distance via des deuxièmes connexions d'accès à distance agencées en parallèle, chacun des clients esclaves (321, 322 ; 323) étant associé à un module correspondant des modules d'accès à distance de clients (240) et à une connexion correspondante des deuxièmes connexions d'accès à distance ;
la détermination indiquant si un support de plusieurs clients est nécessaire ;
si les données d'affichage (306 ; 307 ; 308 ; 309 ; 405) doivent être affichées sur des moniteurs (350 ; 351 ; 352 ; 353) multiples, alors
la division des données d'affichage (306 ; 307 ; 308 ; 309 ; 405) en une pluralité de régions d'affichage (410 ; 411 ; 412 ; 413),
l'affichage d'une région (410) de la pluralité de régions d'affichage (410; 411 ; 412 ; 413) sur un moniteur du client maître (210), et
la fourniture, à l'aide du protocole d'accès à distance via les deuxièmes connexions d'accès à distance agencées en parallèle, de l'autre région (411 ; 412 ; 413) de la pluralité de régions d'affichage (411 ; 412 ; 413) aux modules d'accès à distance de clients (240) des clients esclaves (321, 322 ; 323) pour un affichage sur des moniteurs (351 ; 352 ; 353) des clients esclaves (321, 322 ; 323) ; et,
si les données d'affichage (306 ; 307 ; 308 ; 309 ; 405) doivent être affichées sur un moniteur, l'affichage de la totalité des données d'affichage (306 ; 307 ; 308 ; 309 ; 405) sur le moniteur (350) du client maître (210).

20. Procédé selon la revendication 19, comprenant également :
l'envoi de données de réglage (360 ; 361 ; 362) aux clients esclaves (321, 322 ; 323) par le biais d'un serveur de protocole de transfert de fichiers (FTP) donnant l'ordre aux clients esclaves (321, 322 ; 323) d'établir la connexion avec le client maître (210) et recevoir tout ou partie des données de session (312 ; 314) en provenance du client maître (210).

21. Procédé selon la revendication 19, comprenant également :
la réception de l'autre région (411 ; 412 ; 413) de la pluralité de régions d'affichage (410 ; 411 ; 412 ; 413) au niveau des modules d'accès à distance de clients (240) des clients esclaves (321, 322 ; 323) ; et
l'affichage de l'autre région reçue (411 ; 412 ; 413) de la pluralité de régions d'affichage (410 ; 411 ; 412 ; 413) sur les moniteurs (351 ; 352 ; 353) des clients esclaves (321, 322 ; 323).

22. Procédé selon la revendication 19, comprenant également :
la réception de données de session (312 ; 314) suivantes au niveau du client maître (210) ;
la division en portions des données de session (303, 312 ; 314) suivantes reçues en provenance du serveur (200) ;
le rendu d'une des portions des données de session (312 ; 314) suivantes à l'aide d'une ressource locale du client maître (210) ; et
la fourniture de l'autre des portions des données de session (314) suivantes aux modules d'accès à distance de clients (240) des clients esclaves (321, 322 ; 323).

23. Procédé selon la revendication 22, comprenant également :
la réception de l'autre des portions des données de session (314) suivantes au niveau des modules d'accès à distance de clients (240) des clients esclaves (321, 322 ; 323) ; et
le rendu de l'autre portion reçue des portions des données de session (314) suivantes à l'aide de ressources locales des clients esclaves (321, 322 ; 323).

24. Système, comprenant :
des moyens pour recevoir des données de session (303) au niveau d'un client maître (210) en provenance d'un serveur (200) distant via une connexion d'accès à distance pendant une session d'accès à distance, les données de session (303) incluant des données d'affichage (306 ; 307 ; 308 ; 309 ; 405) ;
des moyens pour fournir tout ou partie des données de session (303, 312 ; 314) reçues au niveau du client maître (210) à des modules d'accès à distance de clients (240) de clients esclaves (321, 322 ; 323) à l'aide d'un protocole d'accès à distance via des deuxièmes connexions d'accès à distance agencées en parallèle, chacun des clients esclaves (321, 322 ; 323) étant associé à un module correspondant des modules d'accès à distance de clients (240) et à une connexion correspondante des deuxièmes connexions d'accès à distance ;
des moyens pour déterminer si un support de plusieurs clients est nécessaire ;
des moyens pour, si les données d'affichage (306 ; 307 ; 308 ; 309 ; 405) doivent être affichées sur de multiples moniteurs (350 ; 351 ; 352 ; 353),
diviser les données d'affichage (306 ; 307 ; 308 ; 309 ; 405) en une pluralité de régions d'affichage (410 ; 411 ; 412 ; 413),
afficher une région de la pluralité de régions d'affichage (410) sur un moniteur (350) du client maître (210), et
fournir, à l'aide du protocole d'accès à distance via les deuxièmes connexions d'accès à distance agencées en parallèle, l'autre région de la pluralité de régions d'affichage aux modules d'accès à distance de clients (240) des clients esclaves (321, 322 ; 323) pour un affichage sur des moniteurs (351 ; 352 ; 353) des clients esclaves (321, 322 ; 323) ; et des moyens pour, si les données d'affichage (306 ; 307 ; 308 ; 309 ; 405) doivent être affichées sur un moniteur, afficher la totalité des données d'affichage (306 ; 307 ; 308 ; 309 ; 405) sur le moniteur (350) du client maître (210).

25. Système selon la revendication 24, comprenant également :
des moyens pour envoyer des données de réglage aux clients esclaves (321, 322 ; 323) par le biais d'un serveur de protocole de transfert de fichiers (FTP) donnant l'ordre aux clients esclaves (321, 322 ; 323) d'établir la connexion avec le client maître (210) et
recevoir tout ou partie des données de session (303, 312 ; 314) en provenance du client maître (210).

26. Système selon la revendication 24, comprenant également :
des moyens pour recevoir l'autre région de la pluralité de régions d'affichage (411 ; 412 ; 413) au niveau des modules d'accès à distance de clients (240) des clients esclaves (321, 322 ; 323) ; et
des moyens pour afficher l'autre région (411 ; 412 ; 413) reçue de la pluralité de régions d'affichage (410 ; 411 ; 412 ; 413) sur les moniteurs (351 ; 352 ; 353) des clients esclaves (321, 322 ; 323).

27. Système selon la revendication 24, comprenant également :
des moyens pour recevoir des données de session (303, 312 ; 314) suivantes au niveau du client maître (210) ;
des moyens pour diviser en portions les données de session (303, 312 ; 314) suivantes reçues en provenance du serveur (200) ;
des moyens pour rendre l'une des portions des données de session (312 ; 314) suivantes à l'aide d'une ressource locale du client maître (210) ; et
des moyens pour fournir l'autre des portions des données de session (314) suivantes aux modules d'accès à distance de clients (240) des clients esclaves (321, 322 ; 323).

28. Système selon la revendication 27, comprenant également :
des moyens pour recevoir l'autre des portions des données de session (314) suivantes au niveau des modules d'accès à distance de clients (240) des clients esclaves (321, 322 ; 323) ; et
des moyens pour rendre l'autre portion reçue des portions des données de session (314) suivantes à l'aide de ressources locales des clients esclaves (321, 322 ; 323).

29. Support lisible par machine, stockant des instructions, les instructions pouvant être exécutées par un ou plusieurs processeurs, et les instructions comprenant un code pour :
recevoir des données de session (303) au niveau d'un client maître (210) en provenance d'un serveur (200) distant via une connexion d'accès à distance pendant une session d'accès à distance, les données de session (303) incluant des données d'affichage (306 ; 307 ; 308 ; 309 ; 405) ; fournir tout ou partie des données de session (303, 312 ; 314) reçues au niveau du client maître (210) à des modules d'accès à distance de clients (240) de clients esclaves (321, 322 ; 323) à l'aide d'un protocole d'accès à distance via des deuxièmes connexions d'accès à distance agencées en parallèle, chacun des clients esclaves (321, 322 ; 323) étant associé à un module correspondant des modules d'accès à distance de clients (240) et à une connexion correspondante des deuxièmes connexions d'accès à distance ;
déterminer si un support de plusieurs clients est nécessaire ;
si les données d'affichage (306 ; 307 ; 308 ; 309 ; 405) doivent être affichées sur des moniteurs (350 ; 351 ; 352 ; 353) multiples, alors
diviser les données d'affichage (306 ; 307 ; 308 ; 309 ; 405) en une pluralité de régions d'affichage (410 ; 411 ; 412 ; 413),
afficher une région de la pluralité de régions d'affichage (410) sur un moniteur (350) du client maître (210), et
fournir, à l'aide du protocole d'accès à distance via les deuxièmes connexions d'accès à distance agencées en parallèle, l'autre région de la pluralité de régions d'affichage (411 ; 412 ; 413) aux modules d'accès à distance de clients (240) des clients esclaves (321, 322 ; 323) pour un affichage sur des moniteurs (351 ; 352 ; 353) des clients esclaves (321, 322 ; 323) ; et
si les données d'affichage (306 ; 307 ; 308 ; 309 ; 405) doivent être affichées sur un moniteur, alors afficher la totalité des données d'affichage (306 ; 307 ; 308 ; 309 ; 405) sur le moniteur (350) du client maître (210).

30. Support lisible par machine selon la revendication 29, dans lequel les instructions comprennent également un code pour :
envoyer des données de réglage aux clients esclaves (321, 322 ; 323) par le biais d'un serveur de protocole de transfert de fichiers (FTP) donnant l'ordre aux clients esclaves (321, 322 ; 323) d'établir la connexion avec le client maître (210) et recevoir tout ou partie des données de session (303, 312 ; 314) en provenance du client maître (210).

31. Support lisible par machine selon la revendication 29, dans lequel les instructions comprennent également un code pour :
recevoir des données de session (303, 312 ; 314) suivantes au niveau du client maître (210) ;
diviser en portions les données de session (303, 312 ; 314) suivantes reçues en provenance du serveur (200) ;
rendre une des portions des données de session (303, 312 ; 314) suivantes à l'aide d'une ressource locale du client maître (210) ; et
fournir l'autre des portions des données de session (314) suivantes aux modules d'accès à distance de clients (240) des clients esclaves (321, 322 ; 323).
